# EUROPEAN PATENT APPLICATION

(11) **EP 2 113 877 A1**
(43) Date of publication of application: **04.11.2009**
(21) Application number: 09158278.3
(22) Date of filing: 20.04.2009
(51) Int. Cl.: G06Q 30/00

(54) **Method and system for providing contents**

(30) Priority: 22.04.2008 KR 20080037432; 20.03.2009 KR 20090023811
(71) Applicant: Ein's I&S Co., Ltd., Gangnam-gu, Seoul 135-924 (KR)
(72) Inventor: Lee, Jeong Hoon, Yangcheon-gu, Seoul 158-732 (KR); Lee, Eun Young, Yangcheon-gu, Seoul 158-732 (KR)
(74) Representative: Beck & Rössig European Patent Attorneys

(57) **Abstract**

A method for providing content through a content providing system, including permitting access to the system through a media device; outputting a screen including a plurality of menu items including a view brand contents item; when the view brand contents item is selected by a user, outputting a screen including specific brand goods and a keyword input window; receiving a keyword input from the user; outputting a search result screen including brands matching the input keyword; outputting an e-book related to a brand selected by the user; outputting a brand store selected by the user; classifying and outputting brand content selected by the user according to a producer of the content; storing content selected by the user in an internal user space; and providing a publicity space in which the content stored in the internal user space can be publicized.

## Description

### CROSS-REFERENCE TO RELATED APPLICATIONS

This application claims the benefit under 35 U.S.C. § 119 of Korean Patent Application No. 10-2009-0023811, filed March 20, 2009, and Korean Patent Application No. 10-2008-0037432, filed April 22, 2008, which are hereby incorporated by reference in their entirety, including all tables, figures, and references.

### BACKGROUND

### FIELD

The present invention relates to a system for providing content and a method for providing content through the system.

### DESCRIPTION OF THE RELATED ART

With development of the Internet and proliferation of mobile communication networks, the age of multimedia such as Internet web, Internet protocol television (IPTV), mobile communication, digital multimedia broadcasting (DMB), etc. is beginning.

Users access content through a variety of media devices, such as by accessing the Internet through a desktop personal computer (PC) or a notebook PC using wired or wireless communication technology, accessing a wireless multiple media service (DMB or mobile multiple media service) through a personal digital assistant (PDA) or a mobile phone, or viewing Internet broadcasts (IPTV) using a television (TV).However, even though there are a variety of media devices, users can access only limited content. Users access limited content through their preferred media devices, or cannot conveniently receive desired content.

### BRIEF SUMMARY

The present invention is directed to a method and system for providing content that makes searching for brand content easy and provides a variety of brand content classified according to a producer of the content.

The present invention is also directed to a method and system for providing content through an e-book including a page for enabling a user to view brand stores and a page for enabling the user to classify and view brand content according to a producer of the content.

The present invention is also directed to a method and system for providing content through a virtual brand store including images of goods and an e-book for enabling a user to view brand content.

The present invention is also directed to a method and system for providing content through a search result related to a specific object selected by a user by regarding the specific object as search input.

According to an aspect of an embodiment of the present invention, there is provided a method for providing content through a content providing system, including: permitting access to the system through a media device; outputting a screen including a plurality of menu items including a view brand content item and an enter hall item; when the view brand content item, among the plurality of menu items, is selected by a user, outputting a screen including specific brand goods and a keyword input window; receiving a keyword input by the user; outputting a search result screen including brands matching the input keyword; outputting an e-book related to a brand selected by the user; through the e-book, outputting a brand store selected by the user; through the e-book, classifying and outputting brand content selected by the user according to a producer of the content; storing in an internal user space content selected by the user from among the content classified and output through the e-book; providing a publicity space in which the content stored in the internal user space can be publicized; and when the enter hall item, among the plurality of menu items, is selected by the user, outputting a screen by which a plurality of brand stores can be individually selected and viewed.

According to another aspect of an embodiment of the present invention, there is provided a system for providing content, the system including: a receiver for receiving an access signal from a media device; a database for classifying brand content created by a plurality of producers according to producer and then storing the brand content; an input module for receiving a keyword input by a user; an output module for presenting a variety of graphical user interface (GUI) screens, for example a first screen including a plurality of menu items including a view brand content item and an enter hall item, a second screen (output for example when the view brand content item, among the plurality of menu items, is selected by the user) including a specific brand goods image and a keyword input window, a third screen on which brands matching the input keyword are displayed, a fourth screen on which an e-book related to a brand selected by the user is displayed, a fifth screen on which a brand store output through the e-book is displayed, a sixth screen on which brand content selected by the user is classified according to producer and output through the e-book, and a seventh screen (output for example when the enter hall item, among the plurality of menu items, is selected by the user)by which a plurality of brand stores can be individually selected and viewed; a user space module for providing an internal user space in which content selected by the user, from among the content classified and output according to producer, can be stored; a publicity space module for providing a space in which the content stored in the internal user space can be publicized; and a controller for permitting access to the system through a media device, and controlling the receiver, the database, the input module, the output module, the user space module, and the publicity space module.

### BRIEF DESCRIPTION OF THE DRAWINGS

The above and other features and advantages of the present invention will become more apparent to those of ordinary skill in the art by describing in detail preferred exemplary embodiments thereof with reference to the attached drawings in which:
FIG. 1 is a block diagram illustrating a method for providing content according to an exemplary embodiment of the present invention;
FIG. 2 is a block diagram of a content providing system according to an exemplary embodiment of the present invention;
FIG. 3 illustrates an example of creating content in a producer module such as the producer module shown in FIG. 2;
FIG. 4 is a flowchart illustrating a method for providing content through a content providing system such as the content providing system shown in FIG. 2;
FIG. 5 illustrates an example of a screen including a plurality of menu items;
FIG. 6 illustrates an example of a screen which may be displayed when a user selects an interface control such as the view brand content item shown in FIG. 5;
FIG. 7 illustrates an example of an e-book related to a specific brand.
FIG. 8 illustrates an example of a screen showing entry into a specific brand store;
FIG. 9 illustrates an example of a screen showing detailed information of specific goods;
FIG. 10 illustrates an example of providing brand content created by a specific producer, through an e-book;
FIG. 11 illustrates an example in which link information is transmitted so that specific content provided through an e-book can be viewed even in an external user space;
FIG. 12 illustrates an example in which brand content associated with a plurality of brands are registered as corresponding brand content;
FIGS. 13 and 14 illustrate examples of screens for commenting on brand content provided through an e-book;
FIG. 15 illustrates an example of displaying an internal user space;
FIG. 16 illustrates an example in which menus for the internal user space are implemented in a multi-sheet form;
FIG. 17 illustrates an example of a coordination space provided by an internal user space;
FIG. 18 illustrates an example of a screen on which content stored in the internal user space can be edited;
FIG. 19 illustrates an example in which an internal user space and an e-book interoperate with each other;
FIG. 20 illustrates an example of a screen for scrapping content stored in an internal user space into an external user space;
FIG. 21 illustrates an example of a publicity space in which brand content can be publicized;
FIGS. 22 and 23 illustrate a hall in which stores are arranged;
FIG. 24 is a flowchart illustrating a method for providing content according to another exemplary embodiment of the present invention.
FIG. 25 is a flowchart illustrating a method for providing content according to another exemplary embodiment of the present invention;
FIG. 26 illustrates a screen on which a brand matching an input keyword is displayed;
FIG. 27 illustrates a screen on which specific brand content selected by a user is classified according to producer and displayed;
FIG. 28 illustrates a specific brand store screen according to an exemplary embodiment of the present invention;
FIG. 29 illustrates an example of a screen provided through an e-book in a brand store;
FIG. 30 illustrates a system for providing shopping item content according to the present invention;
FIG. 31 is a flowchart illustrating a method for providing shopping item content according to the present invention; and
FIGS. 32 to 34 are diagrams illustrating a process of displaying content related to a shopping item using a system according to the present invention.

### DETAILED DESCRIPTION

The subject matter of the present invention is described with specificity to meet statutory requirements. But this description is not intended to limit the scope of this patent. Rather, the inventors have contemplated that the claimed subject matter might also be embodied in other ways, to include different steps or combinations of steps similar to those described in this document, in conjunction with other present or future technologies.

Aspects of the invention may be described in the general context of computer-executable instructions, such as program modules, being executed by a computer. Generally, program modules include routines, programs, objects, components, data structures, etc., that perform particular tasks or implement particular abstract data types. Moreover, those skilled in the art will appreciate that the invention may be practiced with a variety of computer-system configurations, including multiprocessor systems, microprocessor-based or programmable-consumer electronics, minicomputers, mainframe computers, and the like. Any number of computer-systems and computer networks are acceptable for use with the present invention.

Specific hardware devices, programming languages, components, processes, protocols, formats, and numerous other details including operating environments and the like are set forth to provide a thorough understanding of the present invention. In other instances, structures, devices, and processes are shown in block-diagram form, rather than in detail, to avoid obscuring the present invention. But an ordinary-skilled artisan would understand that the present invention may be practiced without these specific details. Computer systems, servers, work stations, and other machines may be connected to one another across a communication medium including, for example, a network or networks.

As one skilled in the art will appreciate, embodiments of the present invention may be embodied as, among other things: a method, system, or computer-program product. Accordingly, the embodiments may take the form of a hardware embodiment, a software embodiment, or an embodiment combining software and hardware. In one embodiment, the present invention takes the form of a computer-program product that includes computer-useable instructions embodied on one or more computer-readable media.

Computer-readable media include both volatile and nonvolatile media, removable and nonremovable media, and contemplate media readable by a database, a switch, and various other network devices. By way of example, and not limitation, computer-readable media comprise media implemented in any method or technology for storing information. Examples of stored information include computer-useable instructions, data structures, program modules, and other data representations. Media examples include, but are not limited to, information-delivery media, RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These technologies can store data momentarily, temporarily, or permanently.

The invention may be practiced in distributed-computing environments where tasks are performed by remote-processing devices that are linked through a communications network. In a distributed-computing environment, program modules may be located in both local and remote computer- storage media including memory storage devices. The computer-useable instructions form an interface to allow a computer to react according to a source of input. The instructions cooperate with other code segments to initiate a variety of tasks in response to data received in conjunction with the source of the received data.

The present invention may be practiced in a network environment such as a communications network. Such networks are widely used to connect various types of network elements, such as routers, servers, gateways, and so forth. Further, the invention may be practiced in a multi-network environment having various, connected public and/or private networks.

Communication between network elements may be wireless or wireline (wired). As will be appreciated by those skilled in the art, communication networks may take several different forms and may use several different communication protocols. And the present invention is not limited by the forms and communication protocols described herein.

The invention is described more fully hereinafter with reference to the accompanying drawings, in which embodiments of the invention are shown. These drawings are hereby incorporated in their entirety. This invention may, however, be embodied in many different forms and should not be construed as limited to the embodiments set forth herein. Rather, these embodiments are provided to fully enable those of ordinary skill in the art to embody and practice the invention.

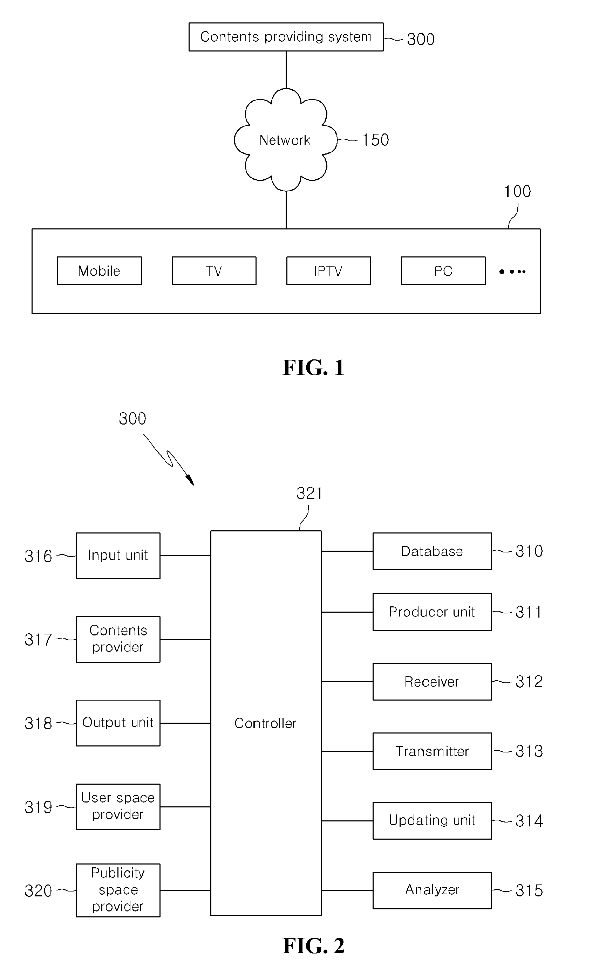

FIG. 1 is a block diagram illustrating a method for providing content according to an exemplary embodiment of the present invention.

A content providing system 300 according to an exemplary embodiment of the present invention may be connected to a media device 100 over a network 150. The network 150 refers to a network performing communication via a communication medium, such as the Internet, a wireless communication network, a broadcasting network, etc.

The media device 100 can be a variety of terminals that access the content providing system 300. For example, the media device 100 may include a mobile terminal, a television (TV), an Internet protocol television (IPTV), or a desktop PC. The media device 100 may include a user terminal for receiving content or an advertiser terminal for providing content.

A plurality of media devices may be used to access the content providing system 300. Accordingly, the content providing system 300 can provide content through multiple media devices. The content provision can include displaying and transmitting the content.

The plurality of media devices may include TV, IPTV, mobile communication, Internet web, digital multimedia broadcasting (DMB), etc.

TV is a medium for receiving a broadcast signal from a broadcasting station, demodulating the received broadcast signal, and displaying video and voice information. TV may include analog TV using analog signals and digital TV using digital signals.

IPTV is a service providing broadcasting channels, video on demand (VOD), bidirectional data service, etc. to one terminal using a high-speed Internet network. Elements of a service for providing IPTV include schemes for collecting and processing content from a content provider (CP), a program provider (PP), etc., determining a content format for compression for smooth transmission to an IPTV network, protecting copyrights on content and preventing illegal distribution, etc. In exemplary embodiments of the present invention, IPTV refers to a medium for transmitting private content which can be controlled using a simple remote control rather than a keyboard, unlike a simple Internet TV.

Mobile communication includes second-generation mobile communication such as global system for mobile telecommunication (GSM), code division multiple access (CDMA), etc., third-generation mobile communication such as global system for mobile telecommunication (WCDMA), CDMA2000, high-speed downlink packet access (HSDPA), high-speed uplink packet access (HSUPA), etc., and next generation mobile communication such as Wibro, Long Term Evolution (LTE), etc. Also, mobile communication may refer to a medium for transmitting private content designed for the relatively small screen of a mobile phone.

Internet web refers to a medium for transmitting documents created with a markup language, such as hyper text markup language (html), extended markup language (xml), and standard generalized markup language (sgml), using hypertext transfer protocol (http) and transmission control protocol-Internet protocol (TCP/IP).

Digital multimedia broadcasting (DMB) refers to a medium for transmitting private content designed for the relatively small screen of a portable DMB terminal, including terrestrial DMB and satellite DMB.

In this disclosure, content corresponding to a media device refers to content which can be presented via that media device. Specifically, content corresponding to the Internet web are created using a markup language such as html, xml, etc., a script language such as java script, and an add-in program such as active x, ocx, etc., and transmitted via TCP/IP. Content corresponding to mobile communication are often simple versions of Internet web content for mobile communication terminals, and can be transmitted via wireless communication technology such as wireless application protocol (WAP). Content corresponding to IPTV may include multimedia files encoded using MPEG-2, MPEG-4, WMV-9, H.264, etc. Content corresponding to DMB may include are multimedia files encoded using MPEG-2 or MPEG-4, which have a relatively smaller capacity than for IPTV, or other file formats.

FIG. 2 is a block diagram of a content providing system 300 according to an exemplary embodiment of the present invention. The content providing system 300 may include a database 310, a producer module 311, a receiver 312, a transmitter 313, an updating module 314, an analysis module 315, an input module 316, a content provider module 317, an output module 318, a user space module 319, a publicity space module 320, and a controller 321. In embodiments of the present invention, some of the shown components in the content providing system 300 may be omitted, or other components may be added.

The database 310 is a computer-readable medium for storing information. For example, specific brand content may be stored in the database 310. Brand content refers to content related to brands, including content related to brand names and content related to goods with brand names. For example, the specific brand content may include articles, moving pictures, images, detailed product information, product articles, product images, and moving pictures of products that are related to a specific brand.

The brand content stored in the database 310 may be classified according to a specific criterion and stored. For example, the brand content can be classified according to media devices through which brand content is provided and stored in the database 310. The brand content can be classified into TV content, mobile content, IPTV content, Internet web content, etc. The content can be classified according to media devices and stored to account for differences in playing environments of the various media devices.

Also, the brand content can be classified according to a producer of the content and stored in the database 310. The producer may be a brand advertiser, an operator of the content providing system, or a user of the brand content. The advertiser is a seller who sells specific brand goods, the operator operates the content providing system 300, and the user receives brand content via the content providing system 300. Accordingly, the content providing system 300 may receive content via a variety of routes and provide a variety of content to the user.

Information on user activity patterns or information on reactions to brand content may also be stored in the database 310. User activity pattern information may include content use information, content creation information, content advertisement information, a product purchase history related to specific content, a brand search history, etc. Information on reaction to brand content may include number of content inquiries, number of scraps, number of comments, number of edits, etc.

The producer module 311 creates content using a specific source. The specific source may include objects of the content. For example, when an article about a specific brand is made of an image and text, both the image and the text may be one object. When the image can be divided into a first image area and a second image area, each of the first image area and the second image area may also be an object.

The producer module 311 may create content corresponding to a second media device using content corresponding to a media device. For example, the producer module 311 may create content suitable for a mobile environment using PC (Internet) content. A method for creating content will be described later.

The receiver 312 may receive a variety of signals or content. For example, the receiver 312 can receive an access signal from a media device such as media device 100 of FIG. 1 or brand content from the advertiser or the user. The received access signal can be delivered to and analyzed by the controller 321. The controller 321 can analyze the access signal to analyze a type of the communication medium or media device, location information for the media device, or user information for the communication medium or media device. The controller 321 may permit access by the media device, based on the analyzed information. When access is permitted, the content providing system 300 may perform data communication with the media device.

Further, the receiver 312 may include a reception path (not shown) corresponding to a communication medium. For example, an access signal via a mobile medium may be received via a first reception path, an access signal on an Internet web via a second reception path, and an access signal on a TV via a third reception path. Also, the receiver 312 may receive specific data from the media device via a reception path corresponding to the communication medium.

The transmitter 313 transmits the brand content stored in the database 310 or link information for enabling the user to view the brand content stored in the database 310, to an external space. The external space refers to a space other than the content providing system 300. For example, the external space may include a user terminal, an advertiser terminal, and a specific web site.

In addition, the transmitter 313 may transmit specific data (e.g., brand content or link information) based on the media device accessing the content providing system 300 under control of the controller 321. For example, the transmitter 313 may transmit mobile content to the mobile terminal, and TV content to the TV.

Further, the transmitter 313 may include a transmission path (not shown) corresponding to the communication medium. For example, data transmitted through the mobile medium may be transmitted via a first transmission path, data transmitted through Internet web may be transmitted via a second transmission path, and data directed to a TV may be transmitted via a third transmission path.

When new brand content is registered in a specific area of the content providing system 300, the updating module 314 may update the new registered brand content in other areas associated with the specific area. Accordingly, when the new content is registered in a first area, the updating module 314 may update the new content in a second area associated with the first area. The first area and the second area may be spaces in the content providing system 300. For example, the first area and the second area may be an e-book, a publicity space, or an internal user space, which will be described later.

When the brand content stored in the content providing system 300 is updated, the controller 321 may inform the user of the update. For example, the controller 321 can indicate up-to-date brand content in an identifiable manner.

The analysis module 315 analyzes user activity history and creates user activity pattern information. For example, the analysis module 315 may analyze activity pattern information fed back from an Internet URL, an IPTV operating system and a mobile communication CP system, or analyze a number of uses of the brand content stored in the content providing system 300 to analyze the user activity history. Also, the analysis module 315 may analyze reaction to the content and create content reaction information. Reaction information may include for example, a number of scraps of specific content provided by the content providing system 300, a number of comments, a number of edits of the specific content, etc.

The input module 316 can receive a user input for brand or content searching (e.g., specific brand content search). For example, the input module 316 may receive a predetermined keyword input by the user for specific brand or content searching. Brand searching entails searching for a specific brand name.

The content provider module 317 provides brand content to the user classified according to a producer of the content. The content producer may be a brand advertiser, an operator of the content providing system, or a user of brand content. The advertiser may create brand content in order to advertise his or her goods, the operator may create brand content to publicize brand content of a specific advertiser to the user, and the user may create new brand content by editing or re-processing the provided brand content.

The content provider module 317 may provide brand content through brand stores. For example, the content provider module 317 may provide images of goods, moving pictures for the goods, articles about the goods, moving pictures of the brand, articles about the brand, etc., through a brand store in cyber space. The brand store and goods image may be a 2D or 3D image.

For convenience, in this disclosure, a space in which a plurality of brand stores can be viewed is referred to as a "hall." The hall is a space including a plurality of stores and may be implemented in 3D or 2D form. By entering the hall, the user may view an entire hall in which a plurality of brand stores are arranged, or individual brand stores.

The scale, location, or image of the brand stores may be determined according to particular criteria, including advertising cost. For example, a brand store with high advertising cost may be arranged in a main hall and a brand store with low advertising cost may be arranged in a sub-store. Also, a brand store with high advertising cost may be implemented using a three-dimensional image and a brand store with low advertising cost may be implemented using a two-dimensional image.

According to an exemplary embodiment of the present invention, a specific brand store may output a specific page in an e-book related to a specific brand. In this disclosure, an e-book is a book produced in an electronic format from which specific information or content can be viewed. The user may view a specific brand store through e-book entry. The e-book may further include pages that are classified according to producer, and allow the user to view the brand content.

According to an exemplary embodiment of the present invention, an e-book for enabling the user to view brand content is included in the brand store. The user can view brand content classified according to producer through the e-book. The brand content provided through the e-book can be scrapped into an internal user space (which will be described later) by a user selection. In this case, content can be scrapped as a whole, or the content may be divided into sub-objects and scrapped.

According to a further embodiment of the present invention, the content provider module 317 provides an e-book including a page for enabling a user to view a brand store, and a page for enabling the user to view specific brand content classified according to producer. That is, the brand stores may be displayed through the e-book.

The output module 318 outputs a screen including various information. For example, the output module 318 displays a screen for a search result matching an input keyword, a store screen for brand content searching, a screen for playing specific brand content, etc.

The user space module 319 provides an internal user space for a user. In this disclosure, "user space" refers to a specific space associated with the user. For example, the user space may include a mini-homepage, a blog, an e-mail homepage, etc. of a specific user. For convenience, the internal user space refers to a user space provided by the content providing system 300, and an external user space refers to a user space provided by a system external to the content providing system 300. The user can store collected brand content in the internal user space.

The publicity space module 318 provides a publicity space in which the content stored in the internal user space can be publicized. The publicity space may be operated as a community with multiple user members. For example, one community, "a group liking brand A", may be formed to share among members in the community event information or other content related to brand A. The content related to brand A may be publicized through the publicity space.

The controller 321 can organically control all functions of the database 310, the producer module 311, the receiver 312, the transmitter 313, the updating module 314, the analysis module 315, the input module 316, the content provider module 317, the output module 318, the user space module 319, and the publicity space module 320.

As will be obvious to one skilled in the art, the functions of the controller 321 and the other elements of the content providing system 300 may be housed in a single computer or hardware device or distributed over multiple devices on a network.

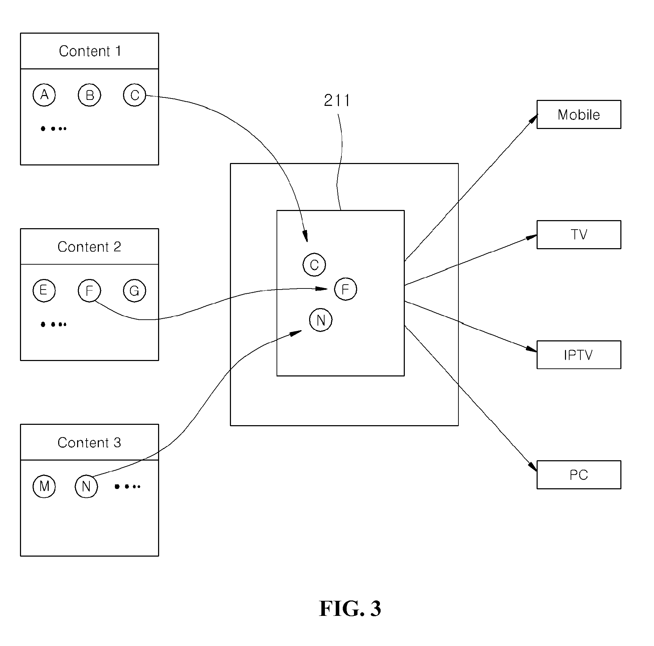

FIG. 3 illustrates an example of content created by a producer module such as the producer module 311 shown in FIG. 2. As shown in FIG. 3, each of the content examples consists of at least one object. Content 1 includes objects A, B, and C, content 2 includes objects E, F, and G, and content 3 includes objects M and N.

The producer module 311 may include an editor (not shown) capable of creating content. The editor may extract a specific object from the content. For example, the editor may extract object C from content 1, object F from content 2, and object N from content 3. The editor may create new content 211 by combining the extracted content C, F, and N.

Further, an attribute of each object may be associated with a specific code. For example, object A may be associated with code A and object B with code B. In this disclosure, an attribute of an object refers to a property for discriminating a specific object from other objects. A load of the content providing system 300 can be minimized by extracting only an attribute of an object and associating it with a specific code, rather than associating all properties of an object with a specific code.

Also, the controller 321 may calculate tracking information of each object through a tracking view for each code. Tracking information of each object refers to information related to a trace of an object. The tracking information may include an object extraction number, movement path information for the extracted object, conversion information for the extracted object, etc.

According to an exemplary embodiment of the present invention, the content providing system 300 views tracking of each code by numbering each code according to the code extraction number. A first extracted object A may be associated with a code "A_0001," and a second extracted object A with a code "A_0002." Accordingly, an extraction number of each object may be viewed through a number (e.g., 0001, 0002) following the code associated with the object attribute (e.g., "A" for object A). When the extracted object is scraped into the external user space, the controller 321 associates code "A_0001" or "A_0002" with scrapping location information and stores the code in the database 310.

The created content 211 may then be provided through a variety of media devices. For example, when the created content 211 corresponds to a first media device, a plurality of content corresponding to a plurality of other media devices may be created using a method for creating content corresponding to a second media device using the created content 211. Simple standard conversions for converting a standard of the first content into a standard of the second content are known in the art and may be simply performed. Alternatively, editing conversion for re-encoding and/or re-arranging multimedia elements of the first content according to the second content are known in the art and may be performed.

By way of example, when the first media device is an Internet web enabled device and the second media device is mobile communication enabled device, the first content of a html or xml standard is converted into the second content conforming to a WAP standard using the simple standard conversion. For example, a relatively complex operation can be performed using a keyboard and a mouse, and a first content example consisting of high-quality images and moving pictures can be operated by a limited number of number keys and converted into a second content example consisting of relatively lower quality images and moving pictures.

By way of further example, when the first media device is an Internet web enabled device and the second media device is an IPTV, each of unit pages constituting a web page is captured as a still image, or is converted into files consisting of only images and moving pictures excluding add-in programs such as active X, flash, etc. When the second media device is a DMB enabled device, conversion may be performed by lowering the quality of images and moving pictures for application to a relatively smaller bandwidth. The plurality of content created using such schemes may be provided via respective media devices. The created content 211 may be converted into content for multiple media devices and be provided to a plurality of such devices.

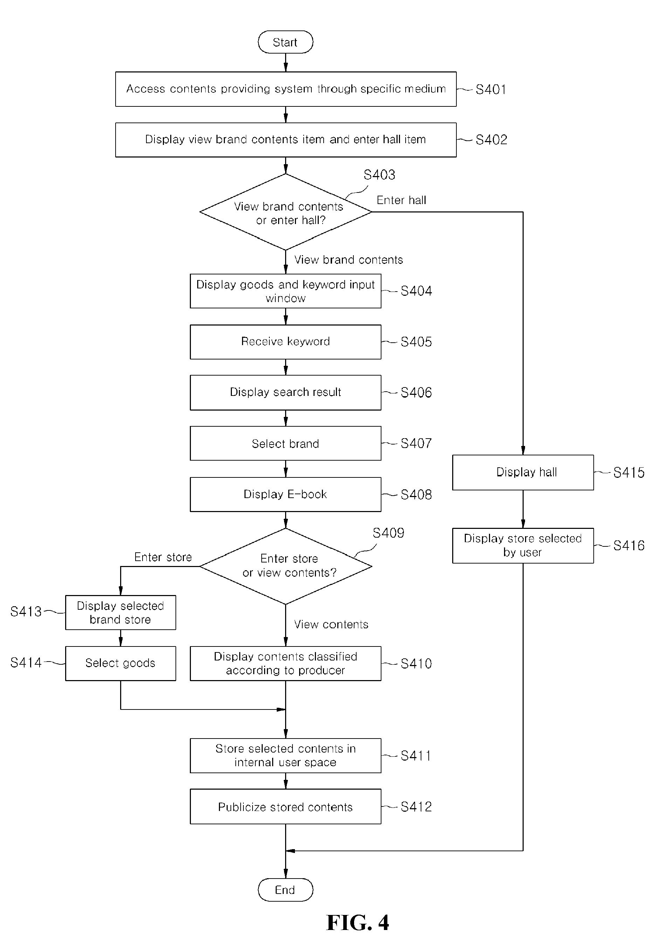

FIG. 4 is a flowchart illustrating a method for providing content through a content providing system such as the content providing system shown in FIG. 2.

A user may attempt to access a content providing system such as content providing system 300 using a media device (e.g., a user terminal). For example, a receiver such as receiver 312 may receive a user access signal and a controller such as the controller 321 may then determine whether to permit access.

For example, the controller 321 may analyze the access signal to analyze a type of a communication medium or media device, location information for the media device, or user information for the communication medium or media device. The controller 321 may then determine whether to permit access based on the analyzed information. When the user access is normally performed, the controller 321 may permit the user access via a media device (S401).

When access is permitted, an output module such as the output module 318 may output a screen including a plurality of menu items including a view brand content item and an enter hall item (S402). The screen including a plurality of menu items may be set as an initial screen.

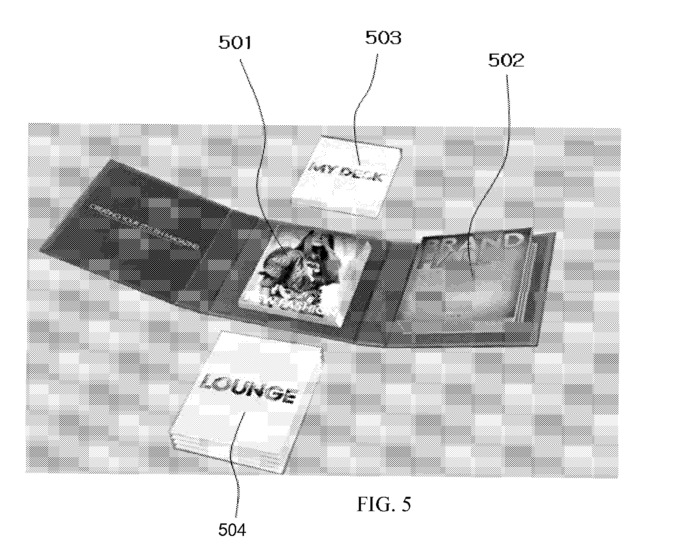

FIG. 5 illustrates an example of a screen including a plurality of menu items. A plurality of menu items including a view brand content item 501, an item for entry into an internal user space 503, an enter hall item 502, and a publicity space entry item 504 may be displayed on the shown screen. The plurality of menu items enables the user to view content via a variety of routes. The view brand content item 501 may be an item for viewing brand content arranged depending on a variety of criteria. For example, the view brand content item 501 may be an item for viewing up-to-date brand content. The enter hall item refers to a link to a hall as described above.

Accordingly, the user may select a desired item among the plurality of items to view the content. For example, when the user selects the view brand content item 501, the output module may output a screen including images of brand goods arranged depending on a specific criterion (e.g., an order of new goods), and an input window for specific brand search (S403, S404).

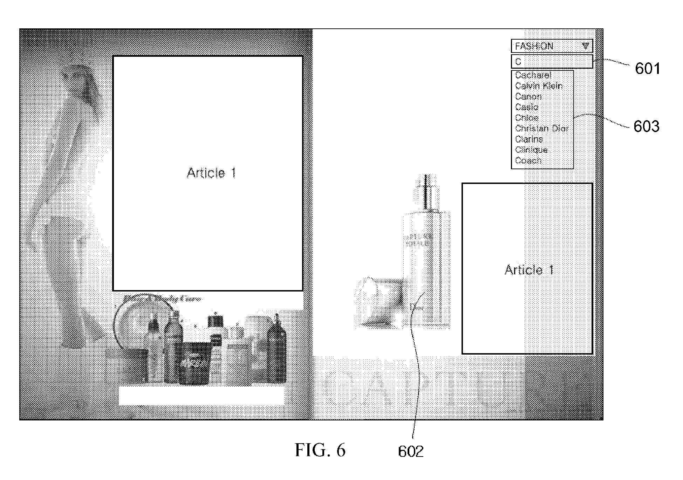

FIG. 6 illustrates an example of a screen which may be displayed when a user selects an interface control such as the view brand content item 501. As shown in FIG. 6, the output module may display a screen including an input window for brand searching 601, and specific goods 602. When the user selects specific goods 602, the output module may output an enlarged image for the specific goods (not shown). Also, the user may input a specific keyword for brand searching in the keyword input window 601. When the search keyword is input, the output module 318 may display a brand search result window 603 including brands matching the search keyword. For example, a brand including the input keyword or a brand of an advertiser purchasing a specific keyword may be displayed in the brand search result window 603.

For example, when an input module such as the input module 316 receives a keyword from the user (S405), a controller such as the controller 321 may output, through the output module, a search result screen matching the input keyword (S406).

The user may select any one of the brands displayed in the brand search result window 603 (S407). When a specific brand is selected by the user, the output module may output an e-book related to the selected specific brand (S408).

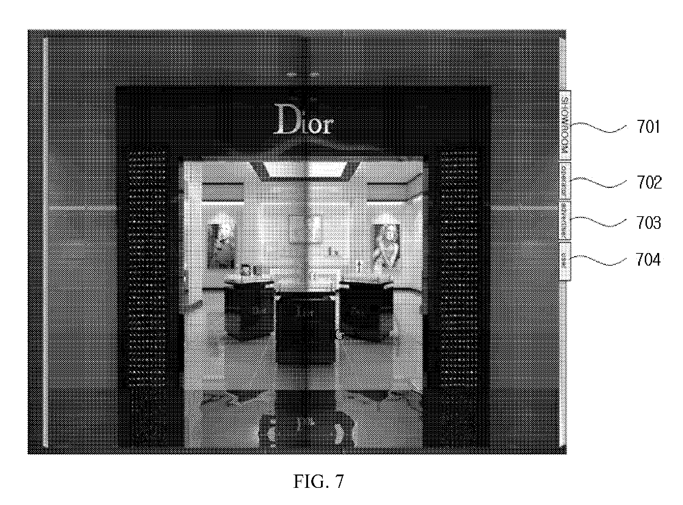

FIG. 7 illustrates an example of an e-book related to a specific brand. As shown in FIG. 7, the e-book includes a page 701 on which a specific brand store can be viewed, and pages 702, 703, and 704 on which specific brand content can be classified and viewed according to producer (e.g., an operator, an advertiser, and a user).

Further, under control of the controller, a default specific page may be displayed as an initial screen of the e-book. The default setting may be set by the operator of the content providing system or by the user. Also, the controller may analyze the user activity pattern to automatically set the default. For example, a page most frequently accessed by the user during a predetermined period may be set as an initial screen.

When the user selects a store view page 701, the output module may output a screen showing that the user enters a specific brand store (S409, S413).

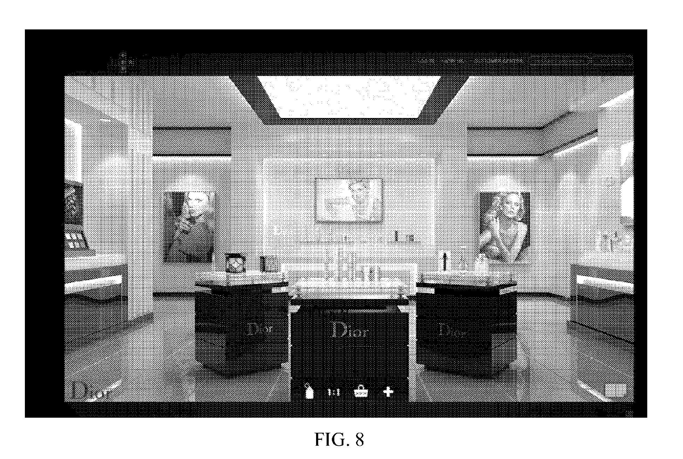

FIG. 8 illustrates an example of a screen showing that a user enters a specific brand store. As shown in FIG. 8, goods provided in the store are displayed in the specific brand store. The output module may move the screen to a specific area in response to an operation of the terminal by the user. Through the screen movement, the user may view a variety of displayed goods. When specific goods among the displayed goods are selected, the output module may output detailed information of the selected goods.

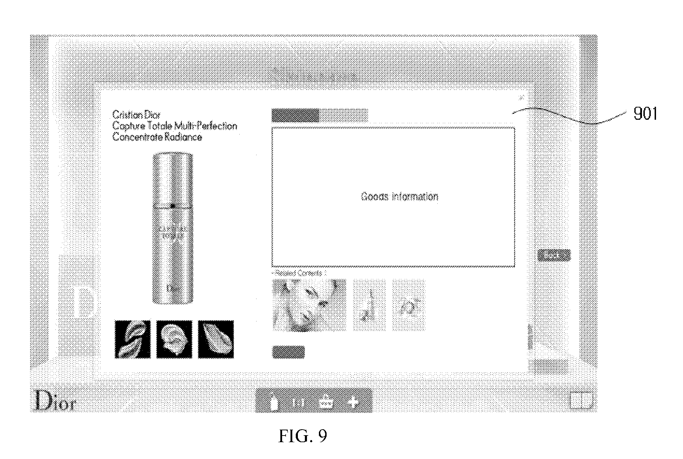

FIG. 9 illustrates an example of a screen showing detailed information of specific goods. As shown in FIG. 9, an enlarged image of the selected goods, articles about the goods, link information (or a link item) for linking to a space in which the specific goods can be purchased, and content associated with the goods may be included in the specific goods information window 901. There may be a variety of content associated with the goods. For example, the associated content may include other brand content of the same type as the selected goods, the same brand content for goods that are similar to the selected goods, etc.

According to an exemplary embodiment of the present invention, when specific goods among goods displayed in the store are selected by the user, an image of the specific goods is scrapped into the internal user space (S414, S411). For example, one entire image may be scrapped or divided into sub-objects and then scrapped. In this case, it is necessary for log-in information of the user to be input for connection to the internal user space. The log-in information may include an ID and a password for internal user space connection.

Meanwhile, the user may select one of the specific producers 702 to 704 on the screen shown in FIG. 7 and view brand content created by the specific producer (S409, S410).

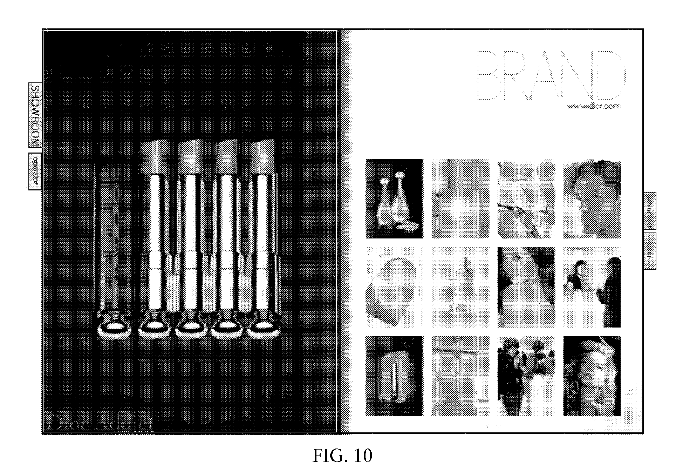

FIG. 10 illustrates an example in which brand content created by a specific producer are provided through an e-book. As shown in FIG. 10, the e-book may provide specific brand content classified according to producer (operator, advertiser, and user). Also, the brand content may be classified according to type of the content (not shown). For example, brand content may be classified according to graphic magazines, articles, and moving pictures, and provided to the user. Also, brand content provided through the e-book may be arranged according to a specific criterion. For example, the brand content may be arranged in order of creation or popularity.

According to an exemplary embodiment of the present invention, when specific content, from among the brand content classified according to producer and output, is selected by the user, the specific content is scrapped into the internal user space (S411). For example, content may be scrapped as a whole, or the content may be divided into sub-objects and scrapped. In this case, it may be necessary for log-in information of the user to be input for connection to the internal user space. The log-in information may include an ID and a password for internal user space connection.

According to an exemplary embodiment of the present invention, the content scraped into the internal user space and stored may be publicized in a publicity space (S412). The publicity space will be described later.

An image of specific goods selected by the user among the goods displayed in the store, or specific brand content selected by the user among the brand content provided through the e-book, may be transmitted to the external user space. For example, a transmitter such as the transmitter 313 may transmit an image of the specific goods or the brand content selected by the user to the external user space. In this case, entire content (the specific goods image or the specific brand content) may be scrapped or the content may be divided into sub-objects and then scrapped.

According to an exemplary embodiment of the present invention, the transmitter transmits only link information to the external user space so that specific content selected by the user (images of specific goods or content of specific brand) can be viewed. Thus, in this embodiment, only the link information is transmitted to the external user space, thereby preventing retransmission and copying of the content, and protecting copyright of the content.

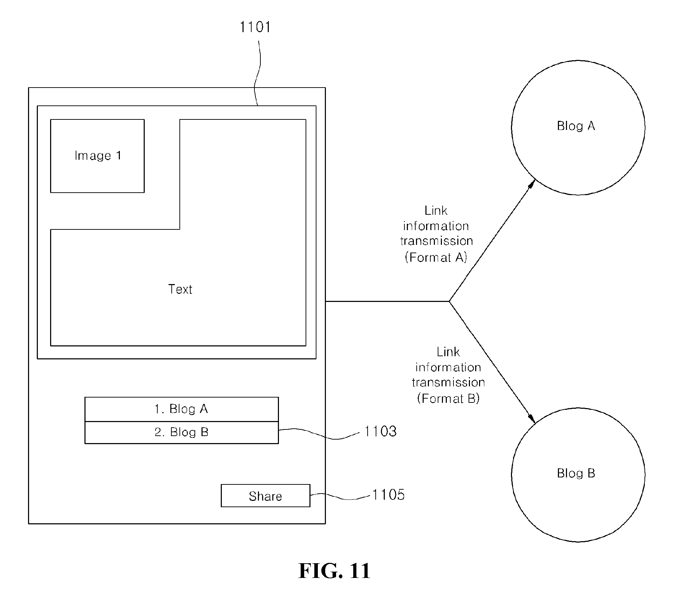

FIG. 11 illustrates an example in which link information is transmitted so that specific content (images of specific goods or content of specific brand) provided through an e-book can be viewed even in an external user space. The link information refers to information for connection to a specific space.

As shown in FIG. 11, the user may view the selected brand content 1101 through an e-book. In this example, a transmitter such as the transmitter 313 may not transmit the brand content 1101 itself, but instead may transmit link information to the external user space so that the brand content 1101 can be viewed. The link information may include information for viewing all of the selected brand content 1101 or information for viewing some objects of the brand content 1101 (e.g., an image, a text, etc.). The user may select the external user space to which the link information is to be transmitted through the external user space input window 1103. For example, when the user selects "blog A" and "blog B" as external user spaces, the link information may be transmitted to "blog A" and "blog B." That is, when the user selects a link information transmission window 1105, the link information may be transmitted to the selected external user space.

In this example, a content providing system transmits the link information in consideration of a format supported in the external user space. For example, when blog A supports format A (e.g., a URL format) and blog B supports format B (e.g., a Java script format), the content providing system may transmit the link information to blog A in format A, and may transmit link information to blog B in format B.

When a specific page to which the link information is transmitted is output, the external user space enables brand content associated with the link information to be presented automatically without user input.

According to an exemplary embodiment of the present invention, a controller such as the controller 321 extracts tracking information of the transmitted link information and stores it in a database such as the database 310. This tracking information may include location information for the transmitted external user space and the number of transmissions of the link information. The location information of the external user space may further include a specific page address of the external user space and a location of a specific area of the specific page.

According to a further embodiment of the present invention, a content providing system registers brand content associated with a plurality of brands and transmits the brand content to a plurality of brand stores.

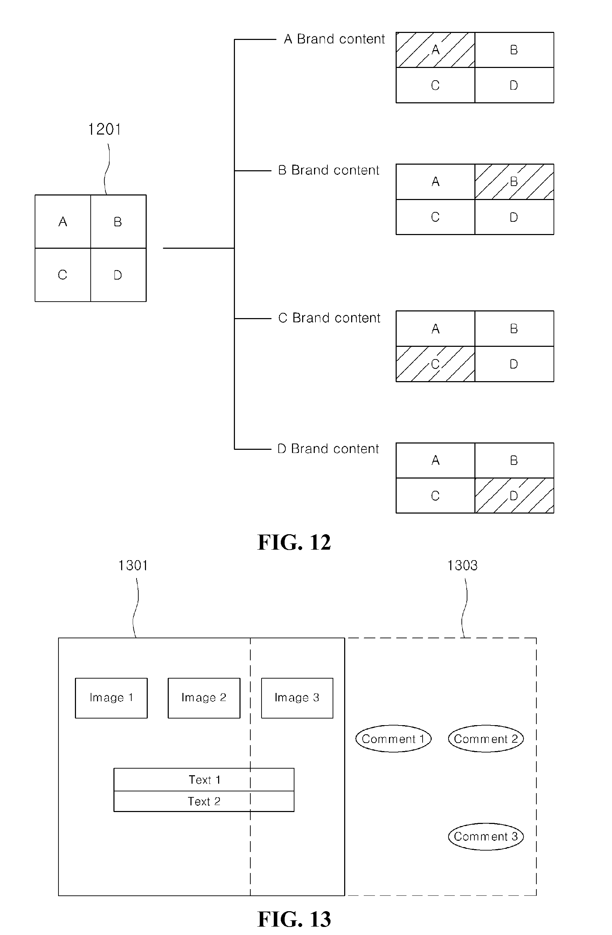

FIG. 12 illustrates an example in which brand content associated with a plurality of brands is registered as corresponding brand content. As shown in FIG. 12, brand content 1201 is associated with a plurality of brands. That is, the brand content 1201 is associated with brands "A, B, C, and D." A controller such as the controller 321 may register the brand content 1201 as content of brand A, content of brand B, content of brand C, and content of brand D, and store them in a database such as the database 310. The registered brand content may be automatically transmitted to the brand stores. Thus, when the brand content 1201 is registered by a content providing system 300, the brand content 1201 may be automatically stored in association with the brand stores. In this case, the controller may extract only the brand-related area from the brand content 1201 and output it in an identifiable manner. For example, when the brand content 1201 are stored as "content of brand A," the controller may extract only an area related to brand A from the brand content 1201 and output it in an identifiable manner.

Further, according to an exemplary embodiment of the present invention, a content provider module such as the content provider module 317 provides a screen for commenting on brand content provided through an e-book.

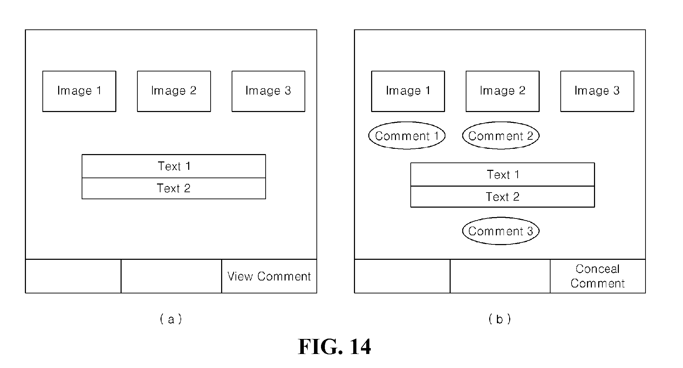

FIGS. 13 and 14 illustrate examples of screens for commenting on brand content provided through an e-book.

As shown in FIG. 13, the content provider module may provide a comment screen 1303 in a layer form, in addition to a screen 1301 on which brand content is provided. The comment screen enables users to comment on the brand content. FIG. 14a illustrates an example in which the comment screen is concealed underneath the content providing screen. The comment screen enables the user to view the content providing screen which shows no comments.

FIG. 14b illustrates an example in which the comment screen overlaps the content providing screen. The screen enables the user to view comments on the brand content and simultaneously to comment on the brand content. In this case, the content provider module may provide a comment screen so that the comments are produced at a point selected by the user. The comment screen enables the user to comment at a desired point and other users to view which portion the comments correspond to.

In addition, according to an exemplary embodiment of the present invention, the content stored in the internal user space may be used in a variety of forms by a user.

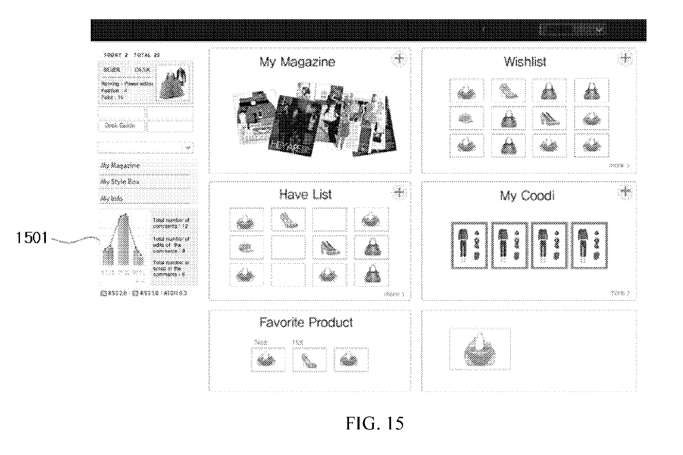

FIG. 15 illustrates an example of displaying an internal user space. As shown in FIG. 15, brand content collected by the user are stored in an internal user space. The user may recreate new content using the collected content.

Some or all of the brand content stored in the internal user space may be classified according to a specific criterion and stored. For example, content for goods desired by the user may be stored in a "Wishlist" area, content for goods owned by the user in a "Have List" area, and content for goods that are favorites of the user in a "Favorite Product" area.

A user space module such as the user space module 319 may manage a class of users based on a user activity index. The user class may be displayed in the internal user space. The user activity index may be determined based on a number of accesses to a content providing system, a number of brand content collections, a number of brand content publicity events, a number of brand content edits, among other activities taken by a user.

A window 1501 including information on reaction to the stored content may be displayed in the internal user space. The reaction information may include a number of comments on the stored content, a number of edits of the content, a number of scraps of the content, among other pertinent pieces of information.

According to an exemplary embodiment of the present invention, menus provided in the internal user space are implemented as a plurality of sheets.

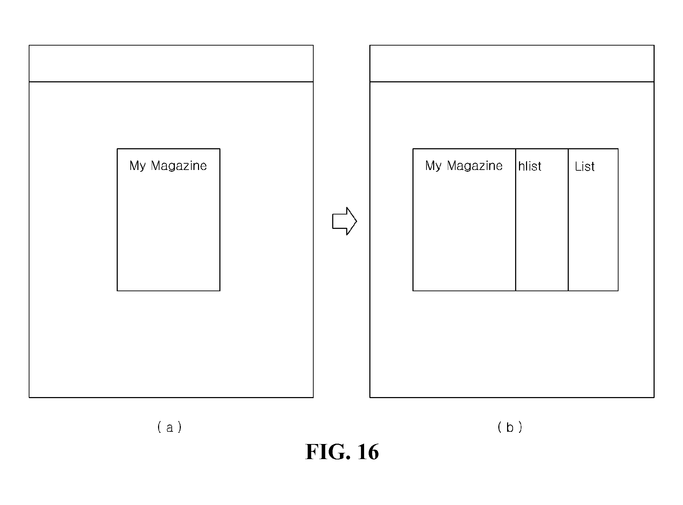

FIG. 16 illustrates an example in which menus for the internal user space are implemented in a multi-sheet form. FIG. 16a illustrates a state in which a plurality of menu sheets are stacked. FIG. 16b illustrates an example in which the stacked sheets are un-stacked. As the sheets are stacked and un-stacked, a user space module such as the user space module 319 may form an environment capable of providing numerous menus.

According to an exemplary embodiment of the present invention, the internal user space includes a space in which images of specific goods can be combined and coordinated. The coordination space enables the user to indirectly implement his or her style.

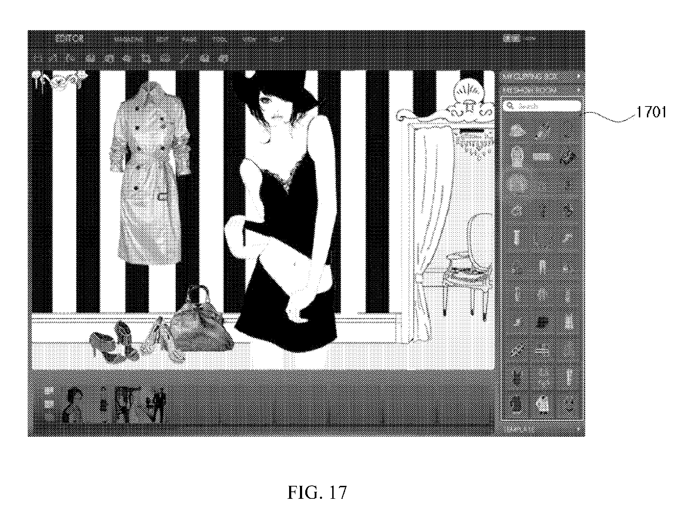

FIG. 17 illustrates an example of a coordination space included in the internal user space. As shown in FIG. 17, the user may select a specific goods item through a window 1701 showing goods items. The user may combine the selected goods items and coordinate displayed models. Images of the coordinated models may be stored in an area of the coordination space. According to an exemplary embodiment of the present invention, brand content stored in the internal user space may be edited object by object by the user.

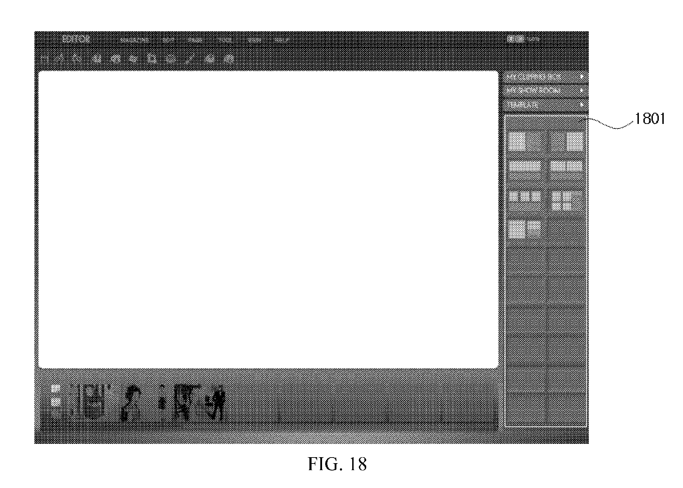

FIG. 18 illustrates an example of a screen on which content stored in the internal user space can be edited. As shown in FIG. 18, a user space module such as the user space module 319 may provide a template to the user terminal to facilitate editing stored content object by object. The template may be provided to the user through a template providing window 1801. The user may select a desired template among templates provided through the window 1801. By using a specific template, the user may easily collect specific objects through simple user input (e.g., drag input, touch input, and click). The collected object may be automatically created as content according to a specific format corresponding to the template selected by the user. Thus, when the user selects a specific object through simple user input new content may be automatically created. The created content may then be stored in an area of the internal user space.

Further, according to an exemplary embodiment of the present invention, the internal user space and the e-book interoperate with each other.

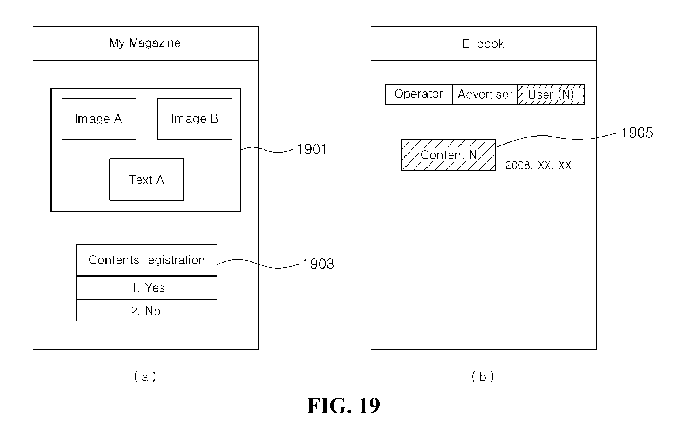

FIG. 19 illustrates an example in which an internal user space and an e-book interoperate with each other.

FIG. 19a illustrates an example in which content stored in the internal user space are edited by the user. The user may collect objects of specific brand content in a specific area 1901. The user may create new content by combining the collected objects. In this example, a user space module such as the user space module 319 provides a specific template to a user terminal, enabling the user to edit the content stored in the internal user space. When the content combination is completed, the user may store the new content created in the internal user space through a content registration window 1903.

FIG. 19b illustrates an example in which the created content is automatically updated in an e-book when new content are created in the internal user space. As shown in FIG. 19b, content 1905 is updated in a "user" section of the e-book. "N" may be displayed in the user section to indicate updated content. A creation date may be indicated in the updated content 1905.

According to an exemplary embodiment of the present invention, the content stored in an internal user space may be scrapped into an external user space. In this case, content may be scrapped as a whole or divided into sub-objects and then scrapped. The scrapping may include transmission of the stored content themselves or transmission of link information for viewing the stored content. Since the link information transmission has been described in connection with FIG. 11, it will be not described again here.

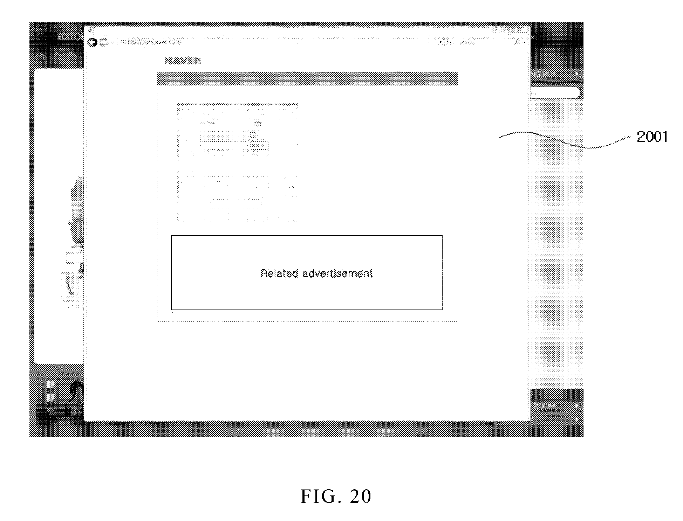

FIG. 20 illustrates an example of a screen for scrapping content stored in an internal user space into an external user space. As shown in FIG. 20, access to the external user space may be necessary for the user to scrap content stored in the internal user space into the external user space. The access enables the user to input log-in information. When the user selects a menu item for scrapping content stored in an internal user space into the external user space, an output module such as the output module 318 may output a window 2001 for enabling the user to input the log-in information. The user may input the log-in information for accessing the external user space through the window 2001.

A method for publicizing content in a publicity space will now be described. For example, the brand content stored in an internal user space may be publicized through a publicity space. As described above, the publicity space may be managed as a community.

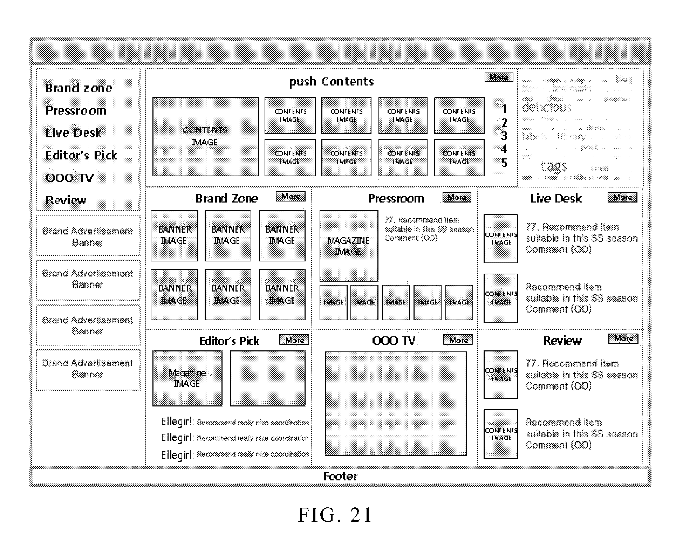

FIG. 21 illustrates an example of a publicity space in which brand content can be publicized. As shown in FIG. 21, a variety of sub-spaces in which brand content can be publicized may be provided in the publicity space. For example, a "brand zone" is a space in which events of brands, advertisements, question information, etc. are displayed. The events, advertisements, question information, etc. may be displayed in a banner form so that the user easily can identify them. A "Press Room" is a space in which brand content that utilizes a power editor are displayed. The power editor may mean a group of content producers that actively perform brand content publicity activities or create influential brand content. The user may receive more brand content through the "Press Room." "Live Desk" is a space showing brand content uploaded in real time to the user. In "Live Desk," a list from which new content, content with a greater number of inquiries, and real-time comments can be viewed by the user. Also, "Editor's Pick" is a space in which brand content (e.g., articles about specific goods) created about a specific main subject and uploaded by the user are collected. A magazine may be created by collecting brand content uploaded by the user. The magazine may be automatically created using a specific template. Also, "Review" is a space in which reviews written by users who have used specific brand goods are displayed. This allows the user to experience indirect use of specific goods. Also, "000 TV" is a space in which moving pictures and graphic magazines for specific goods are provided to the user via a specific player. For example, the user may easily view a desired moving picture or graphic magazine using a specific user input (e.g., click, touch input, drag, etc).

According to an exemplary embodiment of the present invention, a content providing system such as the content providing system 300 may reward users contributing to the publicity of a brand through the publicity space. For example, the content providing system may examine comments on specific brand content, and transmit discount coupons for specific goods or cyber money to a user internal space of users who write excellent reviews.

Meanwhile, when the user selects the enter hall item 502 on the screen shown in FIG. 5, the output module may output a screen showing enter hall (S415).

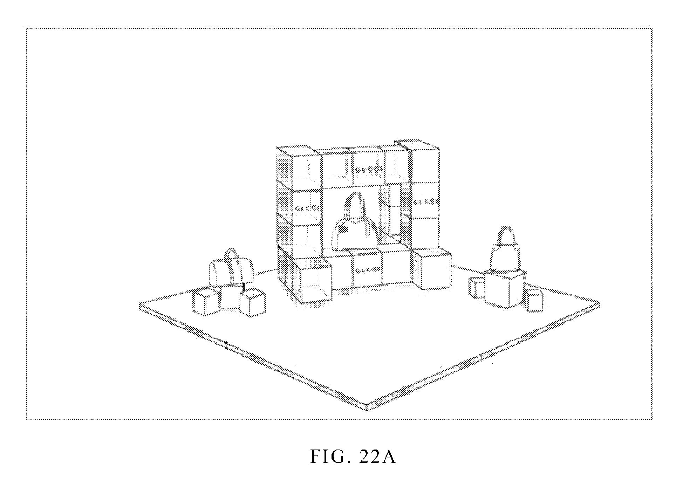

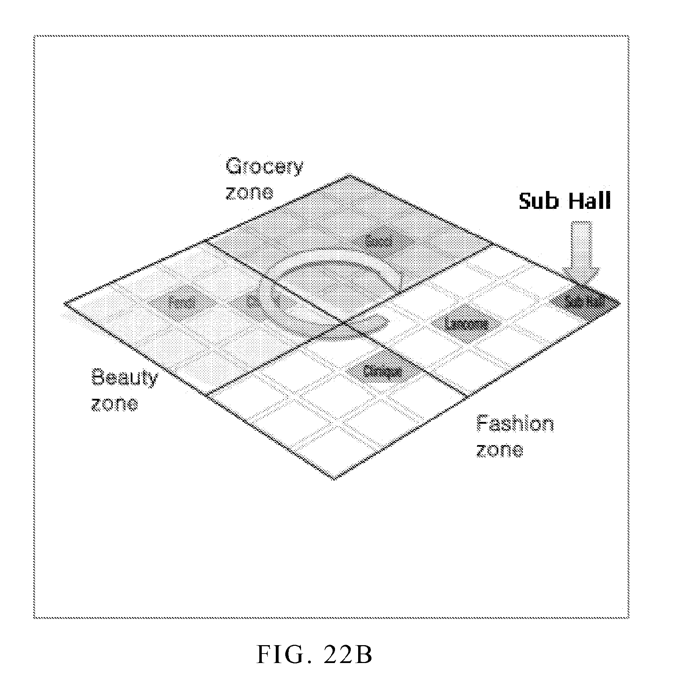

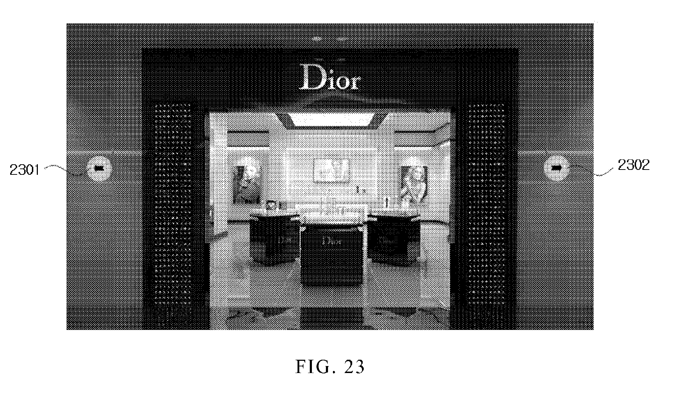

FIGS. 22 and 23 illustrate a hall in which stores are arranged.

FIG. 22a illustrates an individual brand viewing mode in which brand stores can be viewed individually. Accordingly, the user may view stores of each brand through the individual brand viewing mode. Also, in the individual brand viewing mode, the store may be displayed as a three-dimensional image. By operating a user terminal the user may change the displayed vantage point of the three-dimensional image to view other individual brand stores.

FIG. 22b illustrates a full viewing mode in which an entire hall can be viewed. Accordingly, the user may view a location and scale of the brand store through the full viewing mode. Also, stores are classified according to category on the shown screen. For example, the user may view a location of a desired brand store or a grocery-related store.

FIG. 23 illustrates a screen on which each brand store can be viewed through screen movement. The user may move the screen to the left and right using scroll icons 2301 and 2302 displayed on the screen. Although only the left and right scroll icons are shown on the screen in the drawing, the present invention is not limited thereto. For example, scroll icons may also be arranged in upper and lower portions of the screen that move the screen up and down respectively.

The user may view various brand stores through the screens shown in FIGS. 22 and 23 and select a desired store. When the store is selected, an output module such as the output module 318 may output the store (S416).

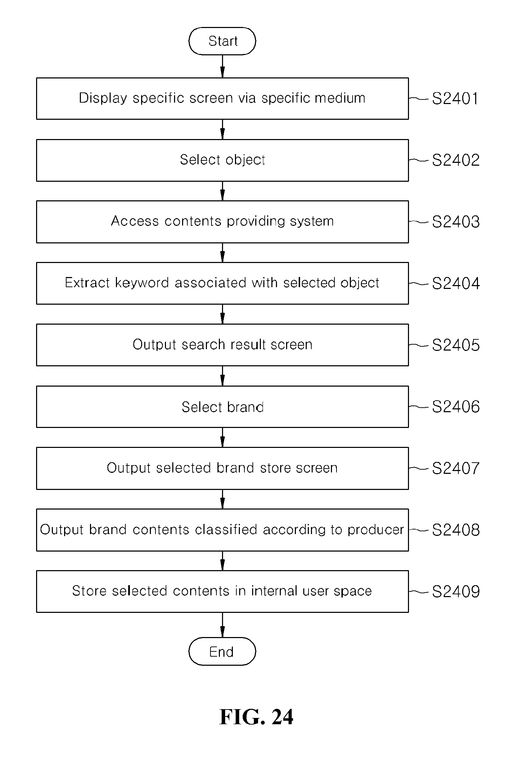

FIG. 24 is a flowchart illustrating a method for providing content according to another exemplary embodiment of the present invention.

As described above, a content providing system such as the content providing system 300 may be accessed via a media device. The media device may include a plurality of media. A specific screen (e.g., an image or a moving picture related to specific brand goods) may be displayed via the media device (S2401). The user may select a specific object on the displayed specific screen (S2402). The selection of the specific object by the user may be performed by mouse drag, touch input, or the like. The specific object may include shoes, bags, or other goods.

When the specific object is selected, the media device may be connected to the content providing system 300. That is, when the receiver 312 receives an input signal for the specific object selection by the user, the controller 321 may determine whether to permit access to the content providing system 300. When the object selection by the user is normally performed, the controller 321 may permit the user access through the media device (S2403). Since the access to the content providing system 300 through the media device has been described above, it will not be described again here.

The controller 321 may extract a keyword associated with the selected object (S2404). The specific object and the keyword may be associated with each other in advance and stored in the database 310. For example, a "clock-related image" may be stored in association with a keyword "clock." The controller 321 may output a search result screen matching the keyword associated with the specific object, through the output module 318 (S2405). A brand matching the keyword may be displayed on the search result screen. The search result may be displayed in the form of a search result window 603 shown in FIG. 6.

Accordingly, access to the content providing system 300 and the keyword input may be simultaneously performed through specific object selection.

Meanwhile, the user may select any one of brands matching the keyword included in the search result screen (S2406). When a specific brand is selected by the user on the search result screen, the output module 318 may output an e-book related to the selected brand. The e-book may include a page for enabling a user to view a selected brand store and a page for enabling the user to classify and view the selected brand content according to producer.

When the user selects the page for brand store viewing, the output module 318 may output the selected brand store through the e-book (S2407). The output brand store may be displayed in the form shown in FIG. 8.

When the user selects the page for enabling the user to classify and view brand content according to producer in the e-book, the output module 318 may output a screen on which the user can classify and view brand content according to producer (S2408). This screen may be displayed in the form shown in FIG. 10.

Meanwhile, by user selection, the brand content provided through the e-book may be stored in the internal user space (S2409).

The above description of the e-book illustrated in FIGS. 4 to 23 and the content provided through the e-book may also apply to a method for providing content as described in relation to FIG. 24.

According to an exemplary embodiment of the present invention, when a specific brand is selected (S2406), the output module 318 immediately outputs the selected brand store. In this case, the brand store may include another e-book for enabling the user to view brand content according to producer. The e-book may be incorporated into the displayed brand store and otherwise perform the same functions as the e-books described in relation to FIGS. 6 to 10. Accordingly, the user may select the e-book included in the brand store to view brand content classified according to producer.

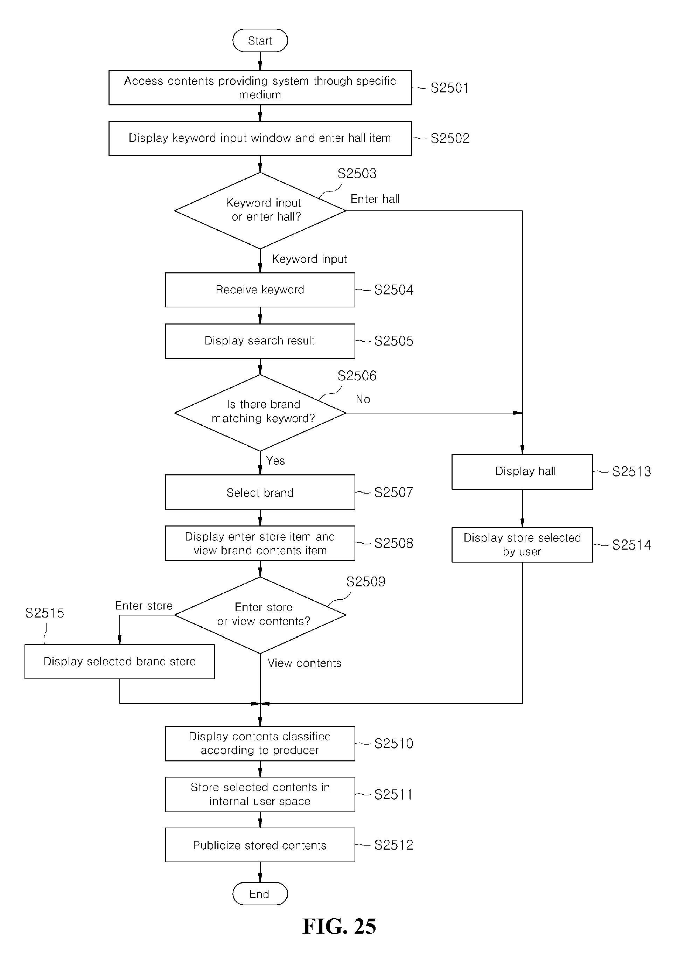

FIG. 25 is a flowchart illustrating a method for providing content according to another exemplary embodiment of the present invention. A user may attempt to access a content providing system such as the content providing system 300 using a media device (e.g., a user terminal). That is, when the receiver 312 receives a user access signal, the controller 321 may determine whether to permit access. Since reception of the access signal and determination whether to permit access have been described above, they will not be described again here. When user access is normally performed, the controller 321 may permit the user access through the media device (S2501).

When access is permitted, the output module 318 may output an initial screen for brand content searching through the media device (S2502). A keyword input window and a menu item for hall entry may be displayed on the initial screen. Selection of the menu item for hall entry may initiate display of a hall as described above in relation to FIGS. 22 and 23. Accordingly, the user may select whether to enter the hall or input a keyword (S2503).

When the input module 316 receives an input keyword from the user (S2504), the controller 321 may output a search result screen matching the input keyword through the output module 318 (S2505).

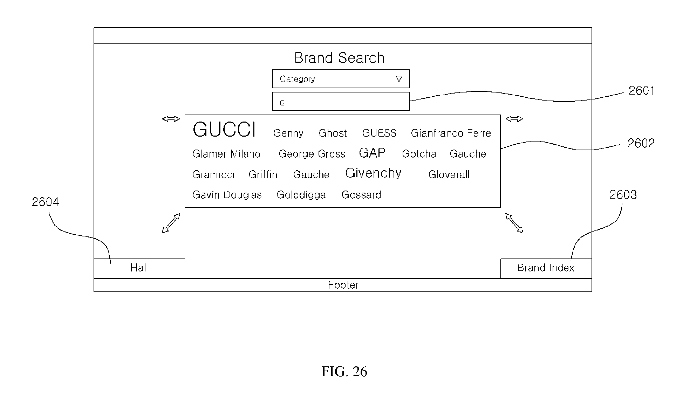

FIG. 26 illustrates a screen on which a brand matching an input keyword is displayed. A keyword input window 2601, a brand search result window 2602 showing brands matching an input keyword, an item for hall entry 2604, and a brand index item 2603 are displayed on the screen.

The user may input a specific keyword for brand searching in the keyword input window 2601. Also, the user may select the item for hall entry 2604 and immediately enter the hall. If the user does not know a brand name to input, the user may select the brand index item 2603 and view brands stored in the database 310.

When the search keyword is input, the output module 318 may display the brand search result window 2602 including brands matching the search keyword. For example, the brand including the input keyword or a brand of an advertiser purchasing a specific keyword may be displayed in the brand search result window 2602.

The user may select any one of brands displayed in the brand search result window 2602 (S2506, S2507). When a specific brand is selected by the user, the output module 318 may output an item for entering the selected specific brand store and an item for viewing the specific brand content (S2508). Accordingly, the user may immediately enter the specific brand store or may view the selected brand content (S2509).

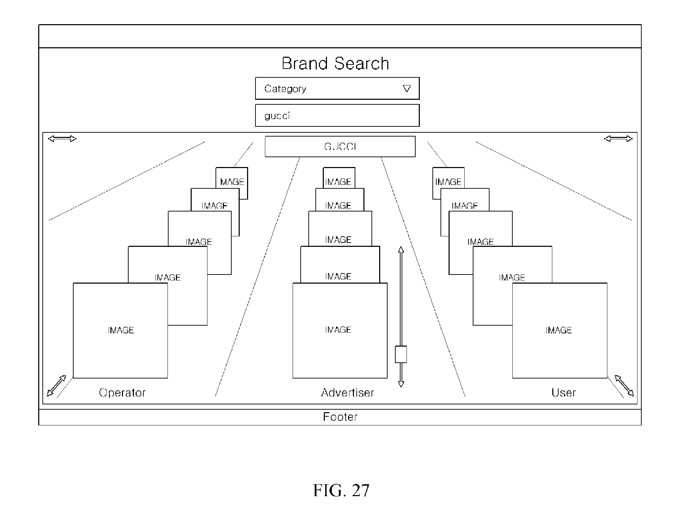

FIG. 27 illustrates a screen on which specific brand content selected by a user are classified according to producer and displayed. Specific brand content selected by a user are classified according to a producer of the content, such as an operator, an advertiser, or a user, and displayed on the shown screen. The displayed brand content may be arranged according to a specific criterion. For example, brand content may be arranged in order of creation or popularity.

Meanwhile, when the user selects the specific brand store entry, the output module 318 can output a screen including the specific brand store (S2515). The screen may include an e-book for enabling the user to view images of goods and the specific brand content arranged in the specific brand store. The user may view the specific brand content classified according to producer through the e-book.

When there is no brand matching the user-input keyword, the controller 321 controls the output module 318 to output the hall automatically or according to user selection (S2506, S2513). The hall may be implemented in the form shown in FIGS. 22 and 23. When the user selects a specific brand store through the hall, the output module 318 may output the selected store (S2514).

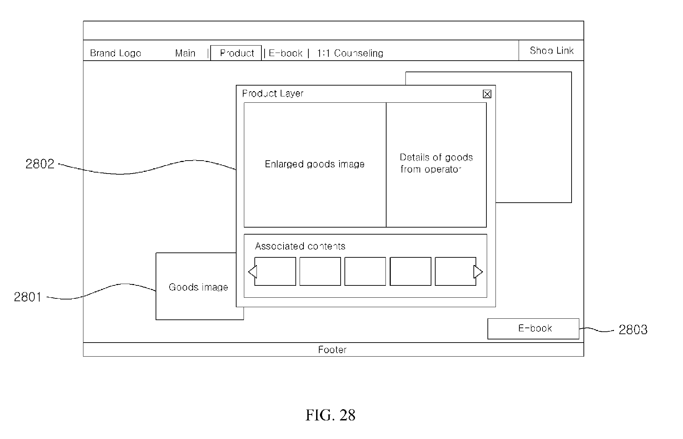

FIG. 28 illustrates a specific brand store screen selected by the user. As shown in FIG. 28, images of goods 2801 are displayed in the specific brand store. When a goods image 2801 is selected by the user, the output module 318 may output a detailed information window 2802 for the selected goods. The detailed information window 2802 may include enlarged images of the selected goods, articles about the goods, and content associated with the goods. There may be a variety of content associated with the goods. For example, the content may include other brand content of the same type as the selected goods, and the same brand content for goods similar to the selected goods.

Also, an item 2803 linked to the e-book may be included in the shown specific brand store. The user may view the specific brand content classified according to producer through the e-book entry.

Various menu items may also be displayed in an upper portion of the shown specific brand store screen. "Brand Logo" is a menu for showing brand logos, and "Main" is a menu for movement to a main screen of the brand store. "Product" is a menu for viewing images of goods displayed in the store, detailed information about the goods, and content associated with the goods. "E-book" is a menu for entering an e-book. Also, "1:1 Assistance" is a menu for providing a communication space between the advertiser and the user operated as a one on one private notice board form. "Shop Link" is a menu for movement to a space in which the user can purchase specific goods based on goods information obtained from the store. The selected menu item may be highlighted in an identifiable manner. The shown screen appears when the "Product" item is selected.

When the e-book entry item in the specific brand store is selected by the user, an e-book provided by the output module 318 may be displayed on the user terminal. Brand content classified according to producer may then be displayed through the e-book (S2510).

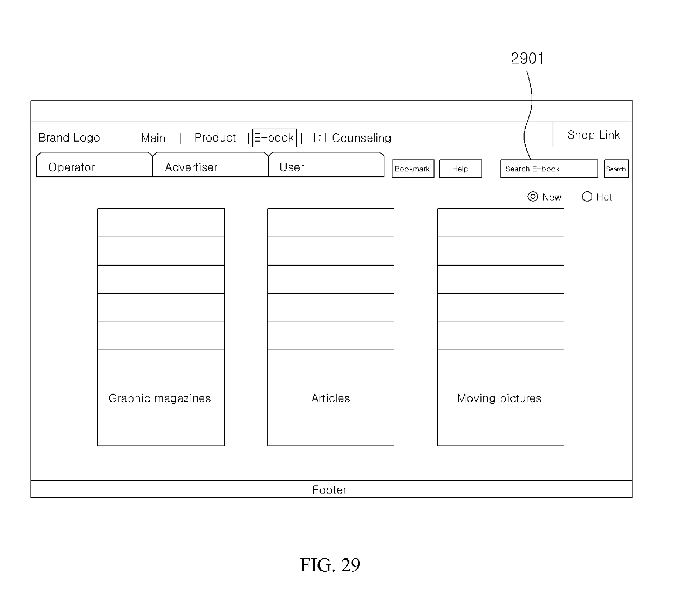

FIG. 29 illustrates an example of a screen provided through an e-book in a brand store. As shown in FIG. 29, the e-book may provide specific brand content according to producer (an operator, an advertiser, and a user). Alternatively, the brand content may be classified according to the type of content and then provided. For example, the brand content may be classified as graphic magazines, articles, and moving pictures, and then provided to the user.

Also, the e-book may include an input window 2901 for rapid content searching. When a user keyword input is received through the input window 2901, the output module 318 may extract only brand content matching a keyword and provide them to the user.

Brand content provided through the e-book may be arranged according to a specific criterion. For example, the brand content may be arranged in order of creation or popularity.

The content provider module 317 may provide a space capable of performing a variety of functions through the e-book to the user. For example, goods, advertisements, events, surveys, etc. may be updated through the e-book. The e-book has different functions according to brands based on specific criteria including advertising cost. Also, through the e-book, a space in which images of specific goods can be combined and coordinated may be provided. A coordination space, as discussed above, enables the user to implement his or her style indirectly.

Meanwhile, brand content provided through the e-book may be scrapped into the internal user space by user selection (S2511). In this case, content may be scrapped as a whole or divided into sub-objects and then scrapped. Since a description of the internal user space has been given above, it will be omitted here.

Also, specific brand content selected by the user, from among the brand content provided through the e-book, may be transmitted to the external user space. That is, the transmitter 313 may transmit the specific brand content selected by the user to the external user space. In this case, content may be scrapped as a whole or divided into sub-objects and then scrapped.

According to an exemplary embodiment of the present invention, the transmitter 313 transmits only link information to the external user space so that the specific brand content selected by the user can be viewed. In this embodiment, only the link information is transmitted to the external user space, thereby preventing retransmission and copying of content, and protecting the copyright of the content. Since a method for transmitting link information has been described above, it will not be described again here.

Further, according to an exemplary embodiment of the present invention, the content providing system 300 may register brand content associated with a plurality of brands and transmit the brand content to a plurality of brand stores. Since a detailed description thereof has been provided above, it will be omitted here.

In addition, according to an exemplary embodiment of the present invention, the content provider module 317 may provide a screen for commenting on the brand content provided through the e-book. Since a method for providing a comment screen has been described above, it will not be described again here.

Also, the publicity space module 320 may provide a space in which content provided by the content provider module 317 can be publicized, to the user (S2512). For example, the publicity space module 320 may provide the user with a space in which the brand content stored in the internal user space can be publicized. As described above, the publicity space may be operated as a community. Since the publicity space has been described above, it will not be described again here.

According to a further embodiment of the present invention, a system for providing shopping item content may be provided, and shopping item content may be provided using the system.

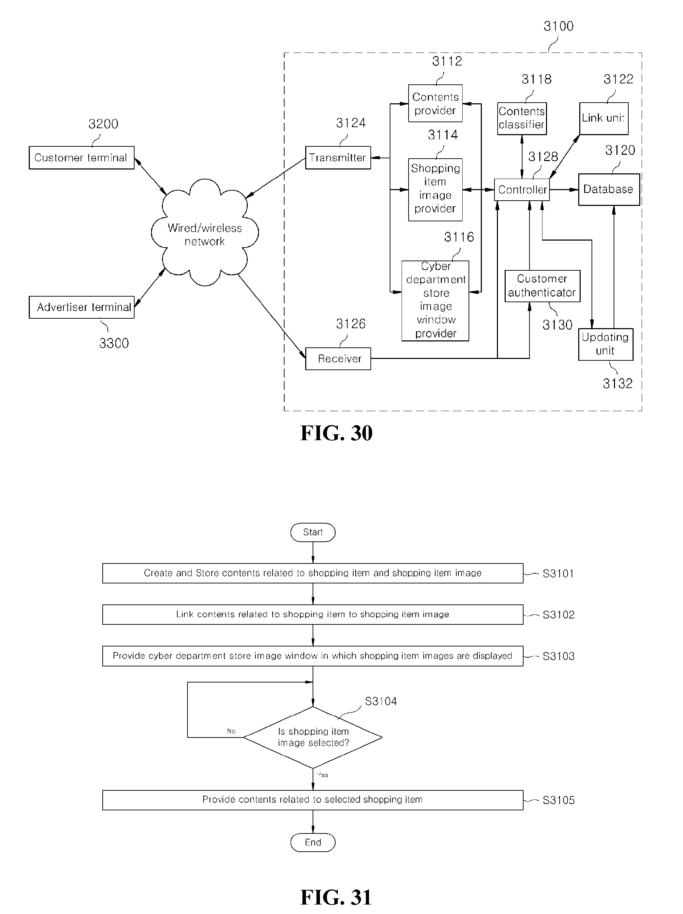

FIG. 30 illustrates a system for providing shopping item content according to the present invention. Referring to FIG. 30, the system for providing shopping item content includes a server system 3100 for providing shopping item-related content, and a customer terminal 3200 for accessing the server system 3100 via a wired/wireless network. In other exemplary embodiments, the system may further include an advertiser terminal 3300 for accessing the server system 3100 via the wired/wireless network.

The server system 3100 of the present invention may include a content provider module 3112, a shopping item image module 3114, a cyber department store image window module 3116, a content classifier 3118, a database 3120, a link module 3122, a transmitter 3124, a receiver 3126, and a controller 3128. In other exemplary embodiments, the server system 3100 may further include a customer authenticator 3130 and an updating module 3132.

As will be obvious to one skilled in the art, the functions of the controller 3128 and the other elements of the server system 3100 may be housed in a single computer or hardware device or distributed over multiple devices on a network. Here, the content provider module 3112 collects information about a shopping item and creates content for the shopping item based on the collected information.The content provider module 3112 may collect information about the shopping item from various sources such as a newspaper article, a magazine, etc., and process and provide the same, or may directly create the content for the shopping item.

The content may be digital or multimedia content related to the shopping item.

Digital content is digital data that can be transmitted via the wired/wireless network and may be at least one of code, text, voice, sound, images, and video. Multimedia content is digital data which is a combination of at least one of code, text, voice, sound, images, and video, may be stored in a storage device or a computer, and may be transmitted and received bidirectionally over a broadband communication network or a high-speed data network.

For example, the content for shopping items may be indirect advertisements including at least one of text, pictures, and photographs that are produced based on various information related to the shopping items.

If the shopping item has related accessories, the content of the present invention may include a variety of articles introducing recent trends, manufacturing method, and how to wear the accessories.

The content article may be made using text, pictures, photographs, etc. to be read by customers with interest and amusement, like magazines. Also, critiques from a fashion editor, a fashion writer, an investigator, or a critic may be used to create content.Other persons such as a stylist, a cameraman, a model, a writer, a reporter, and an illustrator may write, edit, instruct, advise, collect, analyze, select, and deliver fashion information to the consumer. This information may also be used to create content for the shopping item.

Upon receipt of a request for content creation from an advertiser of a specific shopping item, the content provider module 3112 may create content according to a contract condition.

In response to a control signal from the controller, the content classifier 3118 classifies the content created by the content provider module 3112 according to category of the shopping items.

Here, the content is classified and stored in the database 3120 according to category of the shopping items, and a shopping item image and content are simply linked to each other, thereby not placing a burden on the system.

The shopping item image module 3114 converts the shopping item into an image, which is stored in the database 3120.The shopping item image may be produced to emphasize features of the shopping item or to look the same as the actual object, e.g., a photograph.

Accordingly, customers may conveniently view content while shopping.

The link module 3122 then links the content stored in the database 3120 to corresponding shopping item images.

Here, the link is in a hypertext link form. The shopping item image and the shopping item content are connected via the link for movement from the shopping item image to the shopping item content.

When the customer places a pointer on a predetermined shopping item image using an input device such as a mouse, the shopping item image on which the pointer is located is highlighted, and when the highlighted shopping item image is clicked, content linked to the clicked shopping item image is displayed and the customer can obtain information on the selected shopping item.

The cyber department store image window module 3116 provides a cyber department store image window in which a plurality of stores are arranged on each layer and shopping item images are displayed on each store.The cyber department store image window may be produced in a similar structure to an offline department store or large shopping mall, and as a three-dimensional image for visual effect.For example, the cyber department store images may be arranged by classifying the stores according to category, such as a first layer for grocery stores, a second layer for stores for women, a third layer for stores for men, a fourth layer for stores for babies, and a fifth layer for furniture stores, etc.

Also, the cyber department store image may include a plurality of buildings, including a first building for grocery stores, a second building for stores for women, a third building for stores for men, a fourth building for stores for babies, and a fifth building for furniture stores, etc.

The stores may be classified according to shopping item brands and may display store item images in a variety of forms.

Also, each store may have a changing room space in which the customer virtually tries on shopping items.This changing room space enables the customer to indirectly try the shopping items on his or her avatar or body image and may have a notice board so that the customer can leave a message about problems, suggestions for improvement or impressions about the shopping item. Content on the notice board may be delivered to the shopping item producer or the advertiser later for shopping item production.

The database 3120 stores content, shopping item images, and the cyber department store image window. The transmitter 3124 transmits the stored content, the shopping item image, and the cyber department store image window to the customer terminal 3200 for display. And the receiver 3126 receives a signal for viewing a predetermined shopping item image via the cyber department store image window from the customer terminal 3200.

The controller 3128 controls the content provider module 3112, the shopping item image module 3114, the cyber department store image window provider 3116, the content classifier 3118, the database 3120, and the link module 3122.

The customer authenticator 3130 performs customer authentication in response to an access request from the customer terminal.

The updating module 3132 updates content linked to the shopping item selected from the customer terminal 3200.

The customer terminal 3200 may be any portable device capable of accessing the server system 3100 via the wired/wireless network and using content related to the desired shopping item. For example, the customer terminal 3200 may be a portable device having a communication function, such as a personal digital cellular (PDC) phone, a personal communication service (PCS) phone, a personal handyphone system (PHS) phone, a CDMA-2000(1X, 3X) phone, a wideband CDMA (WCDMA) phone, a dual band/dual mode phone, a global standard for mobile (GSM) phone, a mobile broadband system (MBS) phone, a digital multimedia broadcasting (DMB) phone, a smart phone, and a portable phone; a portable terminal such as personal digital assistant (PDA), a hand-held PC, a notebook computer, a laptop computer, a WiBro terminal, an MP3 player, and an MD player; and any hand-held wireless communication device such as an international mobile telecommunication-2000 (IMT-2000) terminal for providing global roaming service and extended mobile communication service.

A method for providing shopping item content will now be described.

FIG. 31 is a flowchart illustrating a method for providing content of shopping items according to the present invention.As shown in FIG. 31, first, a content provider module such as the content provider module 3112 of the server system 3100 collects information for creating content for a shopping item in response to a control signal from a controller such as the controller 3128, and creates the content for the shopping item based on the collected information.

In this example, the content is digital content related to the shopping item, which may be digital data created as code, text, voice, sound, images, and video. The content may also be multimedia content related to the shopping items, which may be digital data combining at least one of code, text, voice, sound, images, and video.

For example, the content may be taken from various sources such as newspaper articles for shopping items, magazines, and the like, or may be directly created based on data or information stored in the database.

In other exemplary embodiments, when a signal for requesting content creation is received from an advertiser terminal such as the advertiser terminal 3300 for the shopping item via a receiver such as the receiver 3126, the controller 3128 transmits a predetermined contract to the advertiser terminal 3300 via a transmitter such as the transmitter 3124.

Subsequently, when a signal of agreement to conditions of the contract is received from the advertiser terminal 3300 via the receiver 3126, the controller 3128 controls the content provider module 3112 and produces content for a shopping item according to the agreed upon contract conditions.

The content classifier 3118 classifies the created content according to category of the shopping items in response to a control signal from the controller 3128.

The content are classified because the link module 3122 can simply link the shopping item image to the content when content are stored in the database 3120 according to category of the shopping items, thereby not placing a burden on the system.The database 3120 stores the classified content according to the category of the shopping items.

Subsequently, the shopping item image module 3114 converts the shopping item into an image in response to a control signal from the controller 3128, and stores the shopping item image in the database 3120 (S3101).The shopping item image may be produced to emphasize features of the shopping item or to look the same as the actual object, e.g., a photograph.

The link module 3122 then links the content stored in the database 3120 to the corresponding shopping item image in response to a control signal from the controller 3128 (S3102).

When the access request signal is received from the customer terminal 3200 via the receiver 3126 of the server system 3100, the customer authenticator 3130 performs customer authentication in response to a control signal from the controller 3128.

When the customer authentication is verified, the cyber department store image window provider 3116 displays a shopping item image of each category stored in the database 3120 in the store of the cyber department store image window. The cyber department store image window may include a plurality of stores in which shopping item images are displayed and arranged on each layer. The cyber department store image window may be displayed on the customer terminal 3200 in response to a control signal from the controller 3128 (S3103).

The customer may search through stores in the cyber department store for a desired shopping item using an input device such as a mouse of the customer terminal 3200.When the customer places a pointer on a predetermined shopping item image, the shopping item image on which the pointer is located is highlighted. When the customer clicks the highlighted shopping item image, the clicked shopping item image is selected.In this case, a signal for the shopping item image is received by the receiver 3126 of the server system 3100 via the network.The controller 3128 checks whether a predetermined shopping item image is selected, through a cyber department store image window from the customer terminal 3200 (S3104).

When a predetermined shopping item image is selected, the controller 3128 provides content linked to the selected shopping item to the customer terminal 3200 (S3105).

In other exemplary embodiments, the controller 3128 may always update content into up-to-date versions through the updating module 3132 and provide the updated content to the customer terminal. For example, when a predetermined shopping item image is selected, the controller 3128 determines whether content linked to the selected shopping item have been already updated. When it is determined that the content have been updated, the controller 3128 provides the content linked to the shopping item to the customer terminal 3200. When the content has not been updated, the controller 3128 determines whether there is content information to be updated. When it is determined that there is content information to be updated, the updating module 3132 updates the content linked to the shopping item in response to a control signal from the controller 3128.

Thus, the method for providing shopping item content according to the present invention provides the content for various shopping items by linking the content to the shopping items systematically arranged in cyber space as a cyber department store. When the customer discovers and selects a desired shopping item, content such as information and data related to the shopping item are displayed. Accordingly, the content user can obtain information related to desired shopping items easily and conveniently. Such information exposes the content user to indirect advertisements for the shopping item, thereby enhancing desire to purchase.

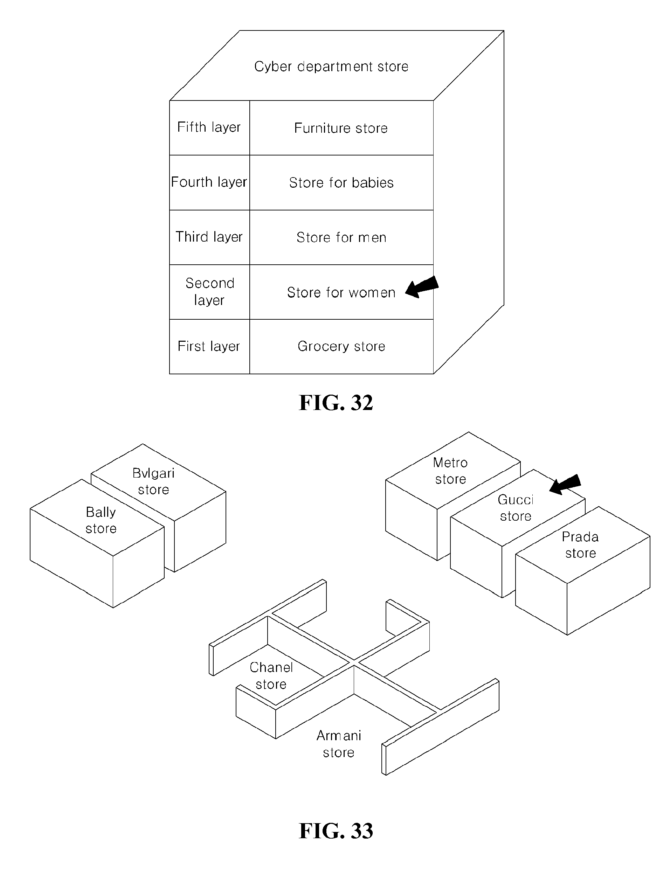

FIGS. 32 to 34 illustrate a process of displaying content related to a shopping item using the system according to the present invention.

As shown in FIG. 32, a predetermined image window of a cyber department store is provided on a screen of a customer terminal such as the customer terminal 3200. Here, the cyber department store is a five-layer building that is divided into a first layer for grocery stores, a second layer for stores for women, a third layer for stores for men, a fourth layer for stores for babies, and a fifth layer for a furniture store.

If the customer selects stores for women on the second layer with a pointer (indicated by an arrow), using the input device of the customer terminal, a layout structure in which stores for women on the second layer are arranged appears on the screen of the customer terminal, as shown in FIG. 33.

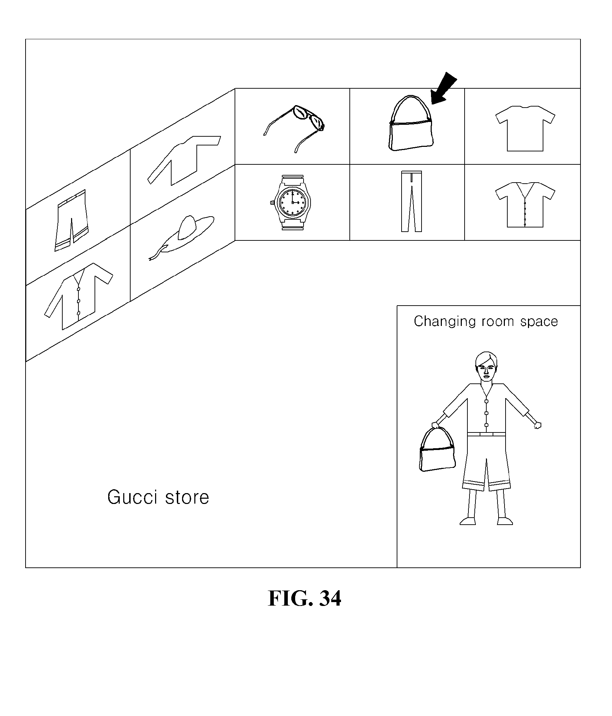

Here, famous brands such as BALLY, MIHARA, DASSLER, GUCCI, and PRADA are classified and then arranged in the respective stores.If the customer selects a GUCCI store with the pointer using the input device of the customer terminal, a layout structure in which a variety of shopping items are displayed in the GUCCI store appears, as shown in FIG. 34.

Here, a variety of shopping items of the GUCCI brand are displayed in the GUCCI store, which has a changing room space in which the customer can indirectly try a selected shopping item on his or her avatar.

If the customer selects a handbag with the pointer using the input device of the customer terminal, handbag-related content (not shown) is displayed. The customer reads displayed article data to recognize recent trends, which enhances desire to purchase the selected handbag.

Accordingly, the customer can use various content related to shopping items, which easily and naturally expose the customer to indirect advertisements for the items and increase desire to purchase.

As a result, the customer can use desired shopping item-related content easily and conveniently to obtain much information and be exposed to indirect advertisements for the shopping items easily and naturally, thereby enhancing desire to purchase.

Also, the content producer can obtain an advertising commission on sales to content users from a shopping item advertiser.

A method and system for providing content according to an exemplary embodiment of the present invention can provide user convenience by enabling users to easily search for desired brands.

The method and system for providing content according to an exemplary embodiment of the present invention can also provide a variety of brand content classified according to producer.

Also, the method and system for providing content according to an exemplary embodiment of the present invention allow users to store provided content in their dedicated space and publicize the stored content.

The method and system for providing content according to an exemplary embodiment of the present invention can conveniently provide a user with content through an e-book including a page for enabling the user to view brand stores and a page for enabling the user to classify and view brand content according to producer.

The method and system for providing content according to an exemplary embodiment of the present invention also allow a user to easily access brand content through a brand store including brand goods images for viewing goods and an e-book for enabling the user to view brand content.

The method and system for providing content according to an exemplary embodiment of the present invention also allow a user to view content stored in an internal user space from an external user space, thereby increasing content publicity.

The method and system for providing content according to an exemplary embodiment of the present invention can also provide a user with a search result related to a specific object selected by the user, by regarding the specific object as search input. The method allows users to receive content conveniently and rapidly in a variety of environments.

The above-described methods, systems, and databases can be implemented as computer-readable code in one or more computer-readable media. As is known in the art, data and instructions can be stored in a single computer-readable medium or distributed amongst multiple computer-readable media.

The systems and methods for providing content are not limited to the configurations and methods of the exemplary embodiments described above, and all or some of the exemplary embodiments may be selectively combined to yield variants. Many different arrangements of the various components depicted, as well as components not shown, are possible without departing from the spirit and scope of the present invention. Embodiments of the present invention have been described with the intent to be illustrative rather than restrictive. A skilled artisan may develop alternative means of implementing the aforementioned improvements without departing from the scope of the present invention. It will be understood that certain features and subcombinations are of utility and may be employed without reference to other features and subcombinations and are contemplated within the scope of the claims. Not all steps listed in the various figures need be carried out in the specific order described.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for providing content through a content providing system, the method comprising:
providing a content providing system comprising an output module, an input module, and a database;
permitting access to the content providing system through a media device;
outputting via the output module a first screen comprising a plurality of menu items comprising a view brand content item and an enter hall item;
outputting via the output module, when the view brand content item is selected by a user, a second screen comprising specific brand goods and a keyword input window;
receiving via the input module a keyword input from the user;
outputting via the output module a search result screen comprising brands matching the keyword input;
outputting via the output module an e-book related to a brand selected by the user;
outputting via the output module and the e-book a brand store selected by the user;
classifying and outputting, via the output module and the e-book, brand content selected by the user according to a producer of the brand content;
storing in the database in an internal user space content selected by the user from among the content classified and output;
providing a publicity space in which the content stored in the internal user space can be publicized; and
when the enter hall item is selected by the user, outputting via the output module a third screen by which a plurality of brand stores can be individually viewed.

2. The method of claim 1, wherein the outputted brand content are divided object by object, and an attribute of the divided object is associated with a specific code.

3. The method of claim 2, further comprising:
dividing content displayed through the e-book object by object, and storing the divided objects in the internal user space.

4. The method of claim 3, further comprising:
providing a space in which the user can combine and coordinate specific goods in the internal user space.

5. The method of claim 4, further comprising:
providing a template so that the user can edit the content stored in the internal user space object by object.

6. The method of claim 5, further comprising:
transmitting link information for viewing the content stored in the internal user space to an external user space.

7. The method of claim 6, further comprising:
outputting detailed information including link information for a link to a space in which the specific goods among the brand goods displayed in the store can be purchased when the specific goods are selected by the user.

8. The method of claim 7, further comprising:
rewarding a person who increases good publicity of the content stored in the internal user space.

9. The method of claim 8, further comprising:
outputting content reaction information including a number of scraps of the content stored in the internal user space, a number of comments about the content, and a number of edits of the content.

10. The method of claim 7, wherein the producer of the brand content comprises an operator, an advertiser, and a user.

11. The method of claim 9, wherein the content providing system can be accessed via a plurality of media devices.

12. The method of claim 11, further comprising:
creating second brand content corresponding to a second media device using first brand content corresponding to a first media device; and
storing the first brand content and the second brand content to match the corresponding media devices,
wherein the second brand content is created using at least one of a standard conversion for converting a standard for the first media device into a standard of the second media device and editing conversion for re-encoding elements of the first brand content.

13. A system for providing content, the system comprising:
a receiver for receiving an access signal for a media device;
a database for classifying brand content created by a plurality of producers according to producer and then storing the brand content;
an input module for receiving a keyword input by a user;
an output module for outputting: a first screen including a plurality of menu items comprising a view brand content item and an enter hall item; a second screen, displayed when the view brand content item is selected by the user, comprising a specific brand goods image and a keyword input window; a third screen on which brands matching the keyword input are displayed; a fourth screen on which an e-book related to a brand selected by the user is displayed; a fifth screen on which a brand store output through the e-book is displayed; a sixth screen on which brand content selected by the user are classified according to a producer of the brand content and output through the e-book; and a seventh screen, displayed when the enter hall item is selected by the user, by which a plurality of brand stores can be individually viewed;
a user space module for providing an internal user space in which content selected by the user among the content classified and outputted according to producer can be stored;
a publicity space module for providing a space in which the content stored in the internal user space can be publicized; and
a controller for permitting access to the system through a media device, and controlling the receiver, the database, the input module, the output module, the user space module, and the publicity space module.

14. The system of claim 15, wherein the controller divides content displayed through the e-book object by object and controls storage of the divided objects in the internal user space.

15. The system of claim 14, wherein in the outputted brand content, an attribute of the divided object is associated with a specific code.

16. The system of claim 15, wherein the internal user space module provides a space in which the user can combine and coordinate specific goods, in the internal user space.

17. The system of claim 16, wherein the output module outputs an eighth screen including detailed information including link information for a link to a space in which the specific goods among the brand goods displayed in the selected brand store can be purchased when the specific goods are selected by the user.

18. One or more computer-readable media having computer-useable instructions embodied thereon for performing a method for providing content through a content providing system, the method comprising:
permitting access to the content providing system through a media device;
outputting a first screen comprising a plurality of menu items comprising a view brand content item and an enter hall item;
outputting, when the view brand content item is selected by a user, a second screen comprising specific brand goods and a keyword input window;
receiving a keyword input from the user;
outputting a search result screen comprising brands matching the keyword input;
outputting an e-book related to a brand selected by the user;
outputting via the e-book a brand store selected by the user;
classifying and outputting, via the e-book, brand content selected by the user according to a producer of the brand content;
storing in an internal user space content selected by the user from among the content classified and output;
providing a publicity space in which the content stored in the internal user space can be publicized; and
outputting, when the enter hall item is selected by the user, a third screen by which a plurality of brand stores can be individually viewed.

19. The media of claim 18, wherein the method further comprises:
providing a space in which the user can combine and coordinate specific goods in the internal user space.

20. The media of claim 19, wherein the method further comprises:
providing a template so that the user can edit the content stored in the internal user space object by object.
